(19) Europäisches Patentamt
European Patent Office
Office européen des brevets

(11) EP 4 703 615 A1

(12) EUROPEAN PATENT APPLICATION

(43) Date of publication:
**04.03.2026 Bulletin 2026/10**

(21) Application number: **25191887.6**

(22) Date of filing: **25.07.2025**

(51) International Patent Classification (IPC):
***F16K 37/00*** *(2006.01)*

(52) Cooperative Patent Classification (CPC):
**F16K 37/0041**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.08.2024 IN 202411064932**

(71) Applicant: **Honeywell International Inc.**
**Charlotte, NC 28202 (US)**

(72) Inventors:
- **MUNIRAJU, Raghavendra**
  **Charlotte, 28202 (US)**
- **DESHPANDE, Tushar**
  **Charlotte, 28202 (US)**

(74) Representative: **Haseltine Lake Kempner LLP**
**Cheapside House**
**138 Cheapside**
**London EC2V 6BJ (GB)**

# (54) APPARATUSES, COMPUTER-IMPLEMENTED METHODS, AND COMPUTER PROGRAM PRODUCTS FOR MONITORING VALVE POSITION

(57) Embodiments of the disclosure provide a method, and apparatus and a computer program product for monitoring valve positions. Some embodiments generate, via at least one sensor installed on a valve, a plurality of measurement frames over a time interval, wherein a respective measurement frame comprises at least one accelerometer measurement and at least one gyroscope measurement; generate respective position data for the plurality of measurement frames based at least in part on the at least one accelerometer measurement and the at least one gyroscope measurement; generate a plurality of angular change values based at least in part on the respective position data of consecutive measurement frames of the plurality of measurement frames; generate a position of the valve in accordance with the time interval based at least in part on the plurality of angular change values; and provision the position of the valve to at least one computing device.

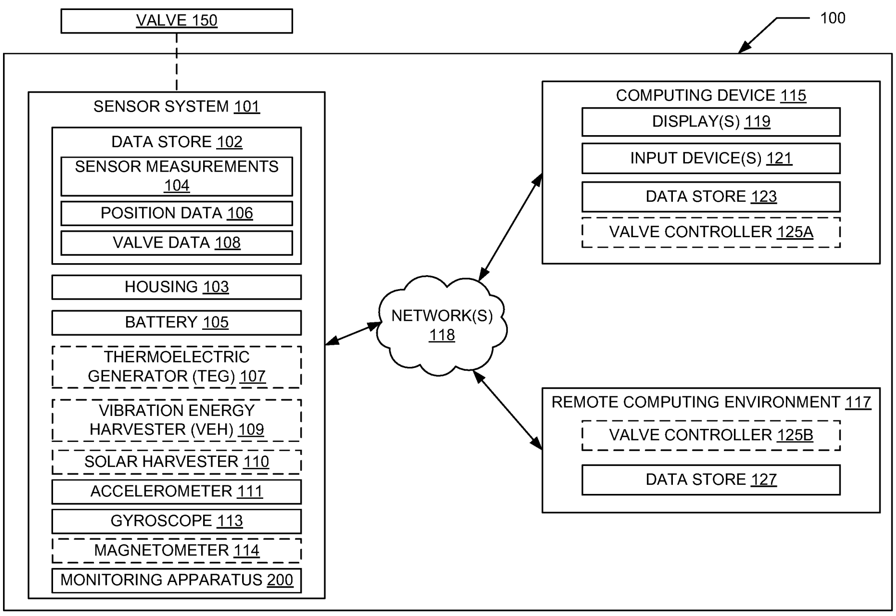


FIG. 1



Processed by Luminess, 75001 PARIS (FR)

## Description

TECHNOLOGICAL FIELD

Embodiments of the present disclosure are generally directed to generating and monitoring positions of valves.

BACKGROUND

Valves are commonly used in industrial processes and fluid systems to control the flow rate, pressure, and direction of fluids, such as gases and liquids. Valve position monitoring may be implemented to ensure valves are configured to a desired state and enable precise control and regulation of the system. Existing approaches to monitoring valve states typically rely on modifying both the stationary and rotating portions of valve mechanical arrangements. For example, a linear hall sensor may be fitted to a stationary portion of a valve and a biasing magnet may be mounted to a rotating portion of the valve. However, such approaches may present significant cost and complexity in implementation due to the multiple components and fixtures utilized. For example, a facility may include thousands of valves of varying shape and function. As a result, traditional retrofitting approaches may require custom configuration of the monitoring elements according to the unique geometry of each valve. Alternatively, a different valve monitoring model may be required for each valve form factor.

Applicant has discovered various technical problems associated with conventional techniques for remotely monitoring valve positions. Through applied effort, ingenuity, and innovation, Applicant has solved many of these identified problems by developing the embodiments of the present disclosure, which are described in detail below.

BRIEF SUMMARY

In general, embodiments of the present disclosure herein provide for improved valve position monitoring. Other implementations for monitoring valve position will be, or will become, apparent to one with skill in the art upon examination of the following figures and detailed description. It is intended that all such additional implementations be included within this description be within the scope of the disclosure, and be protected by the following claims.

In various embodiments, the present apparatuses, methods, and computer program products enable monitoring of valve position. Accurate measurement and tracking of valve position may support precise and regulation of the associated systems in which the valve is implemented. For example, valve position monitoring may enable remote tracking and control of valve states. In some embodiments, the apparatus includes a sensor system configured to be attached to a repositionable portion of a valve. For example, the sensor system may be attached to a handle or stem portion of a valve. In various embodiments, the sensor system is configured to generate a current orientation of the valve and measure changes in the orientation in response to detecting valve motion. The sensor system may embody a singularly housed unit configured for attachment to a repositionable portion of a valve. For example, the sensor system may comprise a cylindrical housing comprising a battery, computing apparatus, and a plurality of sensors by which the current position of the valve may be generated and provisioned to one or more remote computing environments. In this manner, a valve may be retrofitted for remote position monitoring by the installation of a single device. For example, the sensor system may be attached to a rotating portion of a valve (e.g., stem, handle, and/or the like) using a fixed screw arrangement, magnetic adapter, and/or the like. In doing so, the sensor system described herein may overcome challenges of existing retrofitting approaches that require installation of separate components to both rotational and stationary portions of the valve. In various embodiments, the sensor system is adaptable to all types of rotary valves including ball valves, butterfly valves, and/or the like without requiring modification to the existing structures or fittings of the valves. In this manner, the sensor system may reduce the cost and complexity of retrofitting systems with multiple valve types and form factors.

In various embodiments, the sensor system comprises a plurality of sensors configured to generate measurements by which the position of the valve, and changes thereof, may be estimated. For example, the sensor system may include a tri-axis accelerometer, tri-axis gyroscope, tri-axis magnetometer, and/or the like. In various embodiments, the sensor system generates a position of the valve based at least in part on gyroscope measurements, accelerometer measurements, magnetometer measurements, and/or the like, generated by the respective sensors. For example, the sensor system may generate a total rotation of a valve of a time interval of motion based at least in part on measurements of angular velocity, measurements of the Earth's gravitational field, and measurements of the Earth's magnetic field. In some embodiments, the sensor system performs sensor fusion to generate a position of the valve, or a measure of change therein, based at least in part on a combination of accelerometer measurements, gyroscope measurements, magnetometer measurements, and/or the like. In some embodiments, the combination of measurement types overcome drawbacks that are individually associated with a measurement type. For example, the sensor fusion techniques described herein and performed by the sensor system may compensate for gyroscopic drift, accelerometer noise, ferromagnetic interference, and/or the like, which adversely impact the accuracy of gyroscope measurements, accelerometer measurements, and magnetometer measurements, respectively.

In accordance with a first aspect of the disclosure, a computer-implemented method for improved valve position monitoring is provided. The computer-implemented method is executable utilizing any of a myriad of computing device(s) and/or combinations of hardware, software, firmware, and/or the like. In some example embodiments an example computer-implemented method includes generating, via at least one sensor attached to a valve, a plurality of measurement frames over a time interval, wherein a respective measurement frame comprises at least one accelerometer measurement and at least one gyroscope measurement; generating respective position data for the plurality of measurement frames based at least in part on the at least one accelerometer measurement and the at least one gyroscope measurement; generating a plurality of angular change values based at least in part on the respective position data of consecutive measurement frames of the plurality of measurement frames; generating a position of the valve in accordance with the time interval based at least in part on the plurality of angular change values; and provisioning the position of the valve to at least one computing device.

In some embodiments, the position of the valve comprises a total rotation of the valve over the time interval. In some embodiments, the method further comprises summing the plurality of angular change values to generate the total rotation. In some embodiments, the position data comprises a roll value, a pitch value, and a yaw value defining an angular orientation of the at least one sensor during the measurement frame. In some embodiments, the method further comprises provisioning at least a subset of the position data to the at least one computing device, wherein the at least a subset of the position data comprises a respective roll value, pitch value, and yaw value for an initial measurement frame and a terminal measurement frame. In some embodiments, generating a respective angular change value for comprises differencing the respective roll values, pitch values, and yaw values of a pair of consecutive measurement frames.

In some embodiments, the method further comprises, in response to determining a difference between the respective yaw values satisfies a predetermined threshold, setting the difference between the respective yaw values to zero. In some embodiments, the method further comprises generating at least one gyroscope measurement prior to the time interval; and generating the plurality of measurement frames over the time interval in response to determining that the at least one gyroscope measurement prior to the time interval satisfies a predetermined threshold. In some embodiments, a respective measurement frame further comprises at least one magnetometer measurement. In some embodiments, the method further comprises: generating the respective position data for the plurality of measurement frames further based at least in part on the at least one magnetometer measurement.

In some embodiments, the method further comprises normalizing the at least one magnetometer measurement and the at least one accelerometer measurement; generating, for the plurality of measurement frames, respective quaternions based at least in part on an integration of the at least one gyroscope measurement, the at least one normalized accelerometer measurement, and the at least one normalized magnetometer measurement; normalizing the respective quaternions; and generating the respective position data for the plurality of measurement frames based at least in part on the normalized quaternion. In some embodiments, the method further comprises causing rendering of a graphical user interface (GUI) on a display of the at least one computing device, the GUI comprising the position of the valve.

In some embodiments, the method further comprises generating, via the at least one sensor, at least one environmental measurement associated with an environment comprising the valve; and provisioning the at least one environmental measurement to the at least one computing device. In some embodiments, the at least one environmental measurement comprises at least one of temperature, pressure, humidity, vibration, or acoustics. In some embodiments, the method further comprises generating an initial angular orientation of the valve in response to an installation of the apparatus on the valve; storing the initial angular orientation in at least one data store; and generating the position of the valve based at least in part on the plurality of angular change values and the initial angular orientation. In some embodiments, the at least one sensor comprises an inertial measurement unit (IMU) comprising the accelerometer and the gyroscope. In some embodiments, the method further comprises transitioning the IMU from an inactive state to an active state in response to determining an accelerometer measurement from the accelerometer satisfies a predetermined threshold, wherein, in the active state, the IMU is configured to generate the plurality of measurement frames.

In accordance with another aspect of the present disclosure, a computing apparatus for improved valve position monitoring is provided. The computing apparatus in some embodiments includes at least one processor and at least one non-transitory memory, the at least non-transitory one memory having computer-coded instructions stored thereon. The computer-coded instructions in execution with the at least one processor causes the apparatus to perform any one of the example computer-implemented methods described herein. In some other embodiments, the computing apparatus includes means for performing each step of any of the computer-implemented methods described herein. In some embodiments, the apparatus comprises at least one magnetic element configured to attach the apparatus to a valve. In some embodiments, the apparatus comprises a battery; and at least one energy source configured to charge the battery. In some embodiments, the at least one energy source is configured to harvest at least one of solar energy, thermal energy, or acoustic energy.

In accordance with another aspect of the present disclosure, a computer program product for improved valve position monitoring is provided. The computer program product in some embodiments includes at least one non-transitory

computer-readable storage medium having computer program code stored thereon. The computer program code in execution with at least one processor is configured for performing any one of the example computer-implemented methods described herein.

BRIEF DESCRIPTION OF THE DRAWINGS

Having thus described the embodiments of the disclosure in general terms, reference now will be made to the accompanying drawings, which are not necessarily drawn to scale, and wherein:

FIG. 1 illustrates a block diagram of an example network environment in which the present system may operate in accordance with at least some example embodiments of the present disclosure.
FIG. 2 illustrates a block diagram of an example apparatus that may be specially configured in accordance with at least some example embodiments of the present disclosure.
FIG. 3 illustrates an example data architecture in accordance with at least some example embodiments of the present disclosure.
FIG. 4 illustrates an example data flow in accordance with at least some example embodiments of the present disclosure.
FIG. 5 illustrates an example data flow for generating an angular orientation in accordance with at least some example embodiments of the present disclosure.
FIG. 6 illustrates an example data flow for generating an angular orientation of a sensor system in accordance with at least some example embodiments of the present disclosure.
FIG. 7 illustrates an example diagram of valve position monitoring in accordance with at least some example embodiments of the present disclosure.
FIG. 8 illustrates a flowchart depicting operations of an example process for valve position monitoring in accordance with at least some example embodiments of the present disclosure.
FIG. 9 shows a top perspective view of an example sensor system in accordance with at least some example embodiments of the present disclosure.
FIG. 10 shows a bottom perspective view of an example sensor system in accordance with at least some example embodiments of the present disclosure.
FIG. 11 shows a cross-section of an example sensor system in accordance with at least some example embodiments of the present disclosure.
FIG. 12 shows a cross-section of an example sensor system in accordance with at least some example embodiments of the present disclosure.
FIG. 13A shows a top view of an example sensor system in accordance with at least some example embodiments of the present disclosure.
FIG. 13B shows a bottom view of an example sensor system in accordance with at least some example embodiments of the present disclosure.
FIG. 13C shows a left-side view of an example sensor system in accordance with at least some example embodiments of the present disclosure.
FIG. 13D shows a right-side view of an example sensor system in accordance with at least some example embodiments of the present disclosure.
FIG. 13E shows a front view of an example sensor system in accordance with at least some example embodiments of the present disclosure.
FIG. 13F shows a back view of an example sensor system in accordance with at least some example embodiments of the present disclosure.

DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

Overview

Embodiments of the present disclosure provide a myriad of technical advantages in the technical field of valve position monitoring. Some embodiments generate valve positions based at least in part on combining accelerometer measurements, gyroscope measurements, magnetometer measurements, and/or the like. Such processes and techniques may increase precision and accuracy of valve position estimates. In some embodiments, an apparatus for valve position monitoring includes one or more accelerometers, one or more magnetometers, one or more gyroscopes, and/or the like. In various embodiments, the apparatus is configured for attachment to a valve handle, valve stem, or other repositionable portion of the valve. The apparatus may further include one or more computing devices configured to generate a position of the valve based at least in part on measurements from the accelerometer, gyroscope, and magnetometer. In doing so, the position of the valve may be estimated and tracked by retrofitting the valve with a singularly housed apparatus, which may reduce the resource cost and complexity of enabling valve position tracking as compared to other approaches that require attachment of sensing elements to multiple portions of a valve. Further, the apparatuses and techniques of the present disclosure may overcome deficiencies of conventional valve position tracking approaches that typically rely upon a singular measurement type, which is more prone to error and vulnerable to fluctuations in comparison to a fusion of measurement types.

## Definitions

"Valve" refers to any repositionable mechanical component for controlling the passage of material through one or more channels. In some embodiments, a valve is configured to reposition between one or more states to control the passage of material through one or more channels. In various embodiments, control of a fluid includes stopping material movement, permitting material movement, adjusting a rate of material movement, adjusting a direction of material movement, and/or the like. For example, a valve may be configured to transition between a first state and a second state. In the first state, the valve may occlude and prevent passage of material through a channel. In the second state, the valve may be reconfigured such that material may pass through the channel. Alternatively, or additionally, in some embodiments, a valve is configured to transition between a plurality of states, where a respective state is associated with a different magnitude of channel blockage such that a flow rate of material through the channel may be controlled using the valve. In various embodiments, a valve transitions between states via movement in one of a pair of opposing directions. For example, a valve may transition between states via rotation, pivoting, sliding, and/or the like. Non-limiting examples of valves include ball valves, plug valves, gate valves, quarter turn valves, butterfly valves, globe valves, needle valves, and/or the like.

"Measurement" refers to any output of a sensor. For example, a measurement may include an output of a magnetometer, accelerometer, gyroscope, pressure sensor, humidity sensor, microphone, temperature sensor, vibration sensor and/or the like. In some embodiments, a measurement includes angular velocity, magnetic field strength, magnetic field direction, acceleration, temperature, pressure, vibration frequency, vibration intensity, acoustics, and/or the like. In some embodiments, a measurement is generated in accordance with a reference frame including a sensor frame, body frame, Earth-centered, Earth-fixed (ECEF) frame, Earth-centered inertial (ECI) frame, and/or the like. In some embodiments, the present apparatuses, methods, and computer program products generate respective values of pitch, roll, and yaw based at least in part on a fusion of sensor measurements.

"Valve position" refers to an orientation of a repositionable portion of a valve. For example, valve position may include an orientation of a valve handle, valve stem, and/or the like. In some embodiments, a valve position includes one or more values of difference between a current orientation of the repositionable portion of the valve and a prior orientation of the repositionable portion. For example, a valve position may include a value of change in the angular orientation of a valve handle between over a time interval of handle motion. In such context, the valve position may include a total rotation of the handle over the time interval, which may exceed 360 degrees and include a signum indicating a direction of the rotation. Additionally, or alternatively, in some embodiments, a valve position includes an orientation of the repositionable portion relative to a reference range. For example, a valve position may include an angular orientation of a valve handle along a predetermined rotational range, such as an angle of rotation ranging from 0 to 360 degrees. In some embodiments, the present apparatuses, methods, and computer program products generate a position of the valve based at least in part on position data including values of angular change over a plurality of measurement frames. In some embodiments, a respective value of angular change between consecutive measurement frames may be generated based at least in part on respective values of pitch, roll, and yaw.

## Example Systems and Apparatuses of the Disclosure

FIG. 1 illustrates a block diagram of a network environment 100 that may be specially configured and within which embodiments of the present disclosure may operate. Specifically, FIG. 1 depicts an example network environment 100 in which the present techniques for monitoring valve positions may be enacted. As illustrated, the network environment 100 includes one or more sensor systems 101, one or more computing devices 115, one or more remote computing environments 117, and/or the like. In various embodiments, the sensor system 101 generates and provisions to the computing device 115 a current position of a valve 150. In some embodiments, the computing device 115 is configured to log the respective positions of one or more valves 150. In some embodiments, the computing device 115 is configured to provision the respective positions of one or more valves 150 to a remote computing environment 117. In this manner, the elements of the network environment 100 may maintain records of current and historical valve configurations and provide to operators an overview of current valve positions in substantially real-time.

In some embodiments, an example valve 150 comprises a body configured for arrangement between a first channel portion and a second channel portion. The body may define an interior volume through which material may translate between the first channel portion and the second channel portion (e.g., said translation being dependent upon the configuration of the valve 150). The body may comprise a closure mechanism configured to partially or fully occlude the interior volume when transitioned from a first state to one or more secondary states. In some embodiments, the closure mechanism is configured to rotate, slide, and/or pivot to control passage of material between the first and second portions of the interior volume. Additionally, or alternatively, in some embodiments, the closure mechanism is configured to control passage of material between additional segmented portions of the interior volume such that material may be directed into one of a plurality of channels.

In one example, the valve 150 comprises a seat configured to segment the interior volume into a first portion and a second portion. The seat may comprise one or more openings through which material may translate between the first portion and the second portion. The body may further comprise a plug configured to transition between at least a first position and a second position. In the first position, the plug may contact and seal against the seat such the plug occludes the one or more openings and prevents translation of material between the first portion and the second portion. In the second position, the plug may be displaced from the seat such that the one or more openings are unblocked and material may pass between the first and second portions of the interior volume (e.g., and further between the first channel portion and the second channel portion). It will be understood and appreciated that the plug and seat may be configured with a plurality of intermediary states such that a flow rate of the material between the first and second portions may be increased or decreased between a plurality of levels based at least in part on the position of the plug relative to the seat.

In some embodiments, the valve 150 comprises a stem connected to and extending from the enclosure mechanism. In some embodiments, the stem is configured to be repositionable such that the orientation of the enclosure mechanism may be adjusted based on the positioning of the stem. In some embodiments, the valve 150 comprises a handle connected to the stem at an end opposite the connection to the enclosure mechanism. The handle may be manipulated by a human operator or another suitable mechanism to adjust the orientation of the enclosure mechanism and transition the valve 150 between states.

In various embodiments, the sensor system 101 is configured to attach to a valve 150. For example, the sensor system 101 may be attached to the stem, handle, and/or the like. In some embodiments, multiple sensor systems 101 may be attached to a valve 150. In some embodiments, the sensor system 101 is attached to the valve 150 using one or more screw arrangements, magnet adapters, adhesives, straps, snap fittings, and/or the like. For example, the sensor system 101 may include a magnetic element on a bottom surface (see FIG. 10), the magnetic element being configured to secure the sensor system 101 to a ferromagnetic portion of a valve. As another example, the sensor system 101 may be secured to the valve 150 via a bracket and screw arrangement. Common approaches to monitoring valve position may include attaching a hall effect sensor to a moveable portion of the valve 150 (e.g., a handle, stem, and/or the like) and attaching a separate magnetic element to a stationary portion of the valve 150, or vice versa. However, such approaches may increase the complexity and resource cost of retrofitting valves for position monitoring. The use of multiple elements may also result in an increased probability of position measurement errors due to the potential of the elements shifting from a calibrated arrangement. To overcome these challenges, and others, the sensor system 101 is configured to measure a position of the valve 150 using a singularly housed element. In doing so, the complexity and resource cost of retrofitting valves may be minimized and a risk of measurement error and sensor miscalibration reduced.

In some embodiments, the sensor system 101 includes a housing 103 configured to accommodate and sheath sensory elements, data processing elements, data storage elements, and data communication elements of the sensor system 101. In some embodiments, the sensor system 101 includes one or more batteries 105 configured to supply power to the various elements of the sensor system 101. In some embodiments, the sensor system 101 includes one or more energy sources configured to charge the battery 105. In some embodiments, the energy source includes one or more thermoelectric generators (TEGs) 107, vibration energy harvesters (VEH) 109, solar harvesters 110, and/or the like. In some embodiments, the TEG 107 is configured to receive and convert thermal energy of the surrounding environment (e.g., temperature differentials) into electrical energy. In some embodiments, the VEH 109 is configured to receive and convert acoustic energy (e.g., vibrations, acoustics, and/or the like) into electrical energy. In some embodiments, the solar harvester 110 is configured to receive and convert electromagnetic energy (e.g., natural light, artificial light, and/or the like) into electrical energy.

In various embodiments, the sensor system 101 includes a plurality of sensors configured to generate measurements based upon which a current position of the sensor system 101 and/or valve 150 may be generated. In some embodiments, the sensor system 101 includes one or more accelerometers 111, one or more gyroscopes 113, one or more magnetometers 114, and/or the like. In some embodiments, the sensor system 101 includes one or more inertial measurement units (IMUs) that comprise an accelerometer, gyroscope, magnetometer, and/or the like. In some embodiments, the sensor system 101 includes temperature sensors, pressure sensors, acoustic sensors, humidity sensors, and/or the like. In some embodiments, the accelerometer 111 measures the acceleration of motion of the sensor system 101 and portion of the valve 150 to which the sensor system 101 is attached. For example, the accelerometer 111 may generate measurements indicative of changes in the velocity and direction of velocity of the valve handle. In some embodiments, the gyroscope 113 measures, respective to an inertial frame, the orientation and angular velocity of the sensor system 101 and portion of the valve 150 to which the sensor system 101 is attached. For example, the gyroscope 113 may generate measurements indicative of changes in the angular position and velocity of the valve handle. In some embodiments, the magnetometer 114 measures the strength and direction of the Earth's magnetic field relative to the sensor system 101. For example, the magnetometer 114 may measure the magnetic field strength and direction along a tri-axial frame (e.g., x, y, and z axes orthogonal to one another) such that a three-dimensional orientation of the sensor system 101 and portion of the valve 150 may be estimated based at least in part on the magnetic field measurements.

In some embodiments, the sensor system 101 includes one or more monitoring apparatuses 200 and one or more data store 102. Various applications and/or other functionality may be executed in the sensor system 101 and/or apparatus 200 according to various embodiments. Additionally, it will be appreciated that the term "apparatus" may refer collectively to the hardware elements, software elements, firmware elements, and/or the like of the sensor system 101. In various embodiments, the apparatus 200 shown in FIGS. 1 and 2 and described herein may include hardware, software, firmware, and/or any combination thereof, configured to generate a current position of the valve 150 on which the sensor system 101 is installed. The various data in the data store 102 may be accessible to one or more of the apparatus 200, computing device 115, remote computing environment 117, and/or the like. The data store 102 may be representative of a plurality of data stores 102 as can be appreciated. The data stored in the data store 102, for example, is associated with the operation of the various applications, apparatuses, and/or functional entities described herein. The data stored in the data store 102 may include, for example, sensor measurements 104, position data 106, valve data 108, and/or the like.

In some embodiments, sensor measurements 104 include measurements generated by one or more sensors of the sensor system 101. For example, the sensor measurements 104 may include accelerometer measurements, gyroscope measurements, magnetometer measurements, and/or the like. In another example, the sensor measurements may include measurements of temperature, humidity, pressure, sound and/or the like. In some embodiments, the sensor measurements 104 include metadata including creation timestamps, sensor identifiers, and/or the like. In some embodiments, a sensor measurement 104 includes a value of difference between one or more sensor measurements and one or more threshold values or ranges. For example, a gyroscope measurement may include a measure of difference between an angular velocity measurement and a threshold angular velocity.

In some embodiments, position data 106 includes data associated with estimating a position of the sensor system 101 and valve 150 to which the sensor system 101 is attached. In some embodiments, the position data 106 includes cleaned and/or filtered sensor measurements 104. In some embodiments, the position data 106 includes various data that is generated based at least in part on sensor measurements 104. In some embodiments, the position data 106 includes quaternions, rotation matrices, pitch values, roll values, yaw values, and/or the like, which may be used to estimate a current position of the valve 150 on which the sensor system 101 is installed. In some embodiments, the position data 106 weight values, thresholds, constraint policies, and/or the like, which may be applied to sensor measurements 104, position data 106, and/or the like in the process of generating valve positions. In various embodiments, the position data 106 includes historical data associated with historical estimations of valve position. For example, the position data 106 may include prior generated values of pitch, roll, raw, and/or the like. As another example, the position data 106 may include historical sets of quaternions, rotation matrices, and/or the like generated from previous sensor measurements.

In some embodiments, a set of sensor measurements 104 is associated with a measurement frame during which the respective sensor measurements 104 were generated. In various embodiments, respective position data 106 that is generated based at least in part on the set of sensor measurements 104 and valve data 108 that is generated based at least in part on the position data 106 are also associated with the measurement frame. For example, sensor measurements 104, position data 106, valve data 108, and/or the like may include identifiers, timestamps, and/or the like that associate the respective data with a measurement frame and/or a time interval of motion comprising measurement frame.

In various embodiments, valve data 108 includes data associated with position estimations, valve identification, and/or the like. In some embodiments, the valve data 108 includes one or more identifiers that uniquely identify the sensor system 101, valve 150, and/or the like. In some embodiments, the valve data 108 includes a current position of the valve 150, one or more historical positions of the valve 150, and/or the like. For example, the valve data 108 may include a current angular orientation of the valve handle, valve stem, and/or the like. As another example, the valve data 108 may include a total rotation of the valve handle, valve stem, and/or the like in accordance with a time interval of motion. In some embodiments, the valve data 108 includes one or more thresholds or other criteria associated with determining a valve state. For example, the valve data 108 may include a threshold position, threshold level of movement, movement direction and/or the like for determining whether a valve 150 is configured to an open state, a closed state, one or more flow control states, one or more channel connection states, and/or the like. Further exemplary aspects of the sensor measurements 104, position data 106, and valve data 108 are shown in the data architecture 300 depicted in FIG. 3 and described herein.

In some embodiments, the apparatus 200 is configured to activate one or more sensors in response to determining the repositionable portion of the valve 150 is in motion. For example, the sensor system 101 may include one or more ultra-low power, always-on sensors configured to generate accelerometer measurements, gyroscope measurements, and/or the like. In response to determining that the accelerometer measurement, gyroscope measurement, and/or the like meets a predetermined threshold, the apparatus 200 may transition other sensors to an active state in which sensor measurements 104 like may be generated over a time interval comprising the start and end of valve motion. In various embodiments, the apparatus 200 is configured to generate position data 106 based at least in part on sensor measurements 104. For example, the apparatus 200 may generate quaternions based at least in part on a fusion of sensor measurements 104 generated by the accelerometer 111, gyroscope 113, magnetometer 114, and/or the like. The apparatus 200 may generate pitch, roll, and yaw values based at least in part on quaternions and derive values of pitch, roll, and yaw based at least in part on the quaternions and/or a rotation matrix generated based on the quaternions. In some embodiments, the apparatus 200 compares respective angular orientations of the valve 150 over a plurality of measurement frames to estimate the total rotation of the valve 150 over a time interval.

In some embodiments, the apparatus 200 is configured to generate valve data 108 comprising a current position of the valve 150. In some embodiments, the current position of the valve 150 comprises a rotation associated with a measurement frame (e.g., a period within a time interval of valve motion). For example, the current position of the valve 150 may comprise a rotation matrix that describes an angular orientation of the moving portion of the vale 150. As another example, the current position of the valve 150 may comprise a total rotation of the valve 150 over a time interval. In some embodiments, the current position of the valve 150 indicates an absolute rotational orientation of the valve 150. Additionally, or alternatively, in some embodiments, the current position indicates a relative rotational orientation of the valve 150. For example, the current position generated by the apparatus 200 may comprise a measure of difference between a prior reported rotational orientation and a current rotational orientation of the portion of the valve 150 to which the sensor system 101 is attached.

In various embodiments, the apparatus 200 is configured to provision valve data 108 to one or more computing devices 115, one or more remote computing environments 117, and/or the like. In some embodiments, the apparatus 200 provisions to the computing device 115, remote computing environment 117, and/or the like, one or more unique identifiers associated with the sensor system 101, the valve 150 to which the sensor system 101 is attached, the system in which the valve 150 is implemented, and/or the like. As an example, the apparatus 200 may wirelessly provision to the computing device 115 a change in the position of the valve 150.

The data provisioned by the apparatus 200 to the computing device 115 or remote computing environment 117 may include one or more position matrices, pitch values, roll values, yaw values, and/or the like. In some embodiments, the apparatus 200 provisions to the computing device 115 a state of the valve 150, which may be determined based at least in part on the current position of the valve 150. The state of the valve 150 may indicate a degree of closure or openness. For example, the apparatus 200 may provision to the computing device 115 a current position of the valve 150 including an indication that the valve 150 is configured to a closed state, an open state, or an intermediary state associated with one of a plurality of levels of material flow rate. Additionally, or alternatively, the state of the valve 150 may indicate one or more channels to which the valve 150 is connected or from which the valve 150 has been disconnected. For example, the apparatus 200 may provision to the computing device 115 a current position of the valve 150 including an identifier that uniquely identifies a channel to or from which the valve 150 has been connected or disconnected. In some embodiments, the apparatus 200 is configured to provision sensor measurements 104, position data 106, and/or the like to the computing device 115 or remote computing environment 117. For example, the apparatus 200 may provision to the computing device 115 measurements of temperature, pressure, humidity, sound, vibration, and/or the like.

In some embodiments, in response to installation of the sensor system 101 onto a valve 150, the apparatus 200 performs an auto-calibration process to generate an initial position of the sensor system 101 and/or valve 150. In some embodiments, the initial position of the sensor system 101 defines a rotational orientation of the valve 150 with respect to an Earth frame of reference. In some embodiments, the apparatus 200 detects instances in which one or more sensor measurements 104, position data 106, and/or the like satisfy a stored threshold. In response to satisfaction of the threshold, the apparatus 200 may determine that the valve 150 is in motion and generate one or more updated positions of the valve 150, which may be provisioned to the computing device 115 in substantially real-time. As an example, the apparatus 200 may compare gyroscope measurements to a threshold value. In response to two or more consecutive gyroscope measurements exceeding the threshold value, the apparatus 200 may determine that the valve 150 is in motion and carry out functionality for generating the current position of the valve 150 throughout and at conclusion of the motion. In some embodiments, based at least in part on sensor measurements 104, the apparatus 200 determines that the valve 150 has entered motion and subsequently stopped. The apparatus 200 may process sensor measurements 104 and generate position data 106 throughout the motion and stoppage of the valve 150 to estimate the change in position of the valve 150 and generate a prediction of the rotational orientation and/or status of the valve 150 at stoppage.

The computing device 115 includes one or more computing device(s) accessible to an end user. The end user may include a human operator, automated computer operator, and/or the like. For example, the end user may be an operator of a system, facility, and/or the like that comprises the valve 150. In some embodiments, the computing device 115 includes a personal computer, laptop, smartphone, tablet, Internet-of-Things enabled device, smart home device, virtual assistant, alarm system, workstation, work portal, and/or the like. The computing device 115 may include one or more displays 119, one or more visual indicator(s), one or more audio indicator(s) and/or the like that enables output to a user associated with the computing device 115. For example, in some embodiments, the apparatus 200 provisions position data 106, valve data 108, and/or the like to the computing device 115 to cause the computing device 115 to render a graphical user interface (GUI) on the display 119. The GUI may comprise a current position of a valve 150 and, optionally, a valve identifier, valve state (e.g., closed, opened, flow rate, connection, disconnection), and/or the like. In some embodiments, the GUI comprises one or more historical positions of the valve 150. For example, the GUI may comprise a log including a current angular orientation of the valve 150, a prior angular orientation of the valve 150, and a total rotation of the valve over a time interval in which the valve 150 transitioned from between the respective angular orientations. In another example, the apparatus 200 causes the rendering of environmental measurements associated with the valve 150, such as temperature, pressure, humidity, or acoustic measurements.

In some embodiments, the computing device 115 includes one or more input devices 121 for receiving user inputs, such as commands to activate one or more sensors of the sensor system 101, initiate position calibration processes, and/or the like. In some embodiments, the input device 121 include one or more buttons, cursor devices, touch screens, including three-dimensional- or pressure-based touch screens, camera, finger print scanners, accelerometer, retinal scanner, gyroscope, magnetometer, and/or other input devices. In some embodiments, the computing device 115 is configured to communicate with one or more remote computing environments 117. For example, the computing device 115 may provision position data 106, valve data 108, and/or the like to the remote computing environment 117. In some embodiments, the computing device 115 includes memory (e.g., volatile and/or non-volatile memory as described herein) configured to store various data that may be accessible to the computing device 115 and monitoring apparatus 200 to perform various operations and functions described herein. For example, the computing device 115 may include one or more data store 123 configured to store sensor measurements 104, position data 106, valve data 108, and/or the like.

In some embodiments, the remote computing environment 117 comprises a web application, platform, software as a service (SaaS), and/or the like that may be accessed by end users to access, view, and/or retrieve data associated with valves 150. For example, the remote computing environment 117 may embody a cloud storage service for aggregation and retention of data related to valve position monitoring. In some embodiments, the remote computing environment 117 is configured to store position data 106, valve data 108, and/or the like, for one or more valves 150. In some embodiments, the remote computing environment 117 is configured to serve and/or expose the position data 106, valve data 108, and/or the like to one or more computing devices 115. In some embodiments, the remote computing environment 117 is configured to generate and maintain position logs comprising current and historical positions of one or more valves 150. In some embodiments, the remote computing environment 117 provisions position logs to one or more computing devices 115. In some embodiments, the remote computing environment 117 include one or more data store 125 configured to store sensor measurements 104, position data 106, valve data 108, and/or the like.

In various embodiments, the computing device 115 and/or remote computing environment 117 is/are configured to control one or more valves 150 based at least in part on position data 106, valve data 108, and/or the like. For example, the computing device 115 may include a valve controller 125A configured to generate and provision commands for repositioning a valve 150 based at least in part on a current position of the valve 150 as generated by the sensor system 101. As another example, the remote computing environment 117 may include a valve controller 125B configured to cause repositioning of a valve 150. In some embodiments, a valve controller 125A, 125B is configured to provision commands to a valve repositioning system that automatically adjusts a position of the valve 150 based at least in part on a command. For example, the valve repositioning system may include actuators, servos, and/or the like that adjust an angular orientation of a valve 150. Additionally, or alternatively, in some embodiments, a valve controller 125A, 125B is configured to provision commands to a computing device of a valve operator responsible for manipulating the valve 150 in accordance with received commands.

In some embodiments, the computing device 115 and/or remote computing environment 117 is/are communicable with the sensor system 101 (e.g., via the monitoring apparatus 200). In some embodiments, the apparatus 200, computing device 115, and/or remote computing environment 117 are communicable over one or more communications network(s), for example the communications network(s) 118.

It should be appreciated that the communications network 118 in some embodiments is embodied in any of a myriad of network configurations. In some embodiments, the communications network 118 embodies a public network (e.g., the Internet). In some embodiments, the communications network 118 embodies a private network (e.g., an internal, localized, and/or closed-off network between particular devices). In some other embodiments, the communications network 118 embodies a hybrid network (e.g., a network enabling internal communications between particular connected devices and external communications with other devices). The communications network 118 in some embodiments may include one or more base station(s), relay(s), router(s), switch(es), cell tower(s), communications cable(s) and/or associated routing station(s), and/or the like. In some embodiments, the communications network 118 includes one or more user-controlled computing device(s) (e.g., a user owner router and/or modem) and/or one or more external utility devices (e.g., Internet service provider communication tower(s) and/or other device(s)). In some embodiments, the apparatus 200 is configured to communicate with the computing device 115 via Bluetooth, Zigbee, wireless fidelity (Wi-Fi), ultra-wideband (UWB), infrared, Z-wave, and/or the like.

Each of the components of the system communicatively coupled to transmit data to and/or receive data from one another over the same or different wireless or wired networks embodying the communications network 118. Such configuration(s) include, without limitation, a wired or wireless Personal Area Network (PAN), Local Area Network (LAN), Metropolitan Area Network (MAN), Wide Area Network (WAN), and/or the like. Additionally, while FIG. 1 illustrate certain system entities as separate, standalone entities communicating over the communications network 118, the various embodiments are not limited to this particular architecture. In other embodiments, one or more computing entities share one or more components, hardware, and/or the like, or otherwise are embodied by a single computing device such that connection(s) between the computing entities are over the communications network 118 are altered and/or rendered unnecessary.

FIG. 2 illustrates a block diagram of an example apparatus that may be specially configured in accordance with at least some example embodiments of the present disclosure; Specifically, FIG. 2 depicts an example monitoring apparatus 200 specially configured to monitor valve position in accordance with at least some example embodiments of the present disclosure. In some embodiments, the sensor system 101 is embodied by one or more system(s), such as the monitoring apparatus 200 as depicted in FIG. 2 and described herein. The monitoring apparatus 200 includes processor 201, memory 203, communications circuitry 205, input/output circuitry 207, measurement processing circuitry 209, position estimation circuitry 211, and data analysis circuitry 213. In some embodiments, the monitoring apparatus 200 is configured, using one or more of the processor 201, memory 203, communications circuitry 205, input/output circuitry 207, measurement processing circuitry 209, and/or position estimation circuitry 211 to execute and perform the operations described herein. It will be understood and appreciated that the general term "apparatus" may be used collectively to refer to elements of the sensor system 101 depicted in FIGS. 1 and 9-12 and described herein and, further, to the elements 201-211 of the specially configured monitoring apparatus 200 depicted in FIG. 2 and described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, modifying, restoring, processing, displaying, storing, determining, creating/generating, predicting/estimating, monitoring, evaluating, comparing, and/or similar terms used herein interchangeably. In one embodiment, these functions, operations, and/or processes may be performed on data, content, information, and/or similar terms used herein interchangeably. In this regard, the monitoring apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the monitoring apparatus 200 provide or supplement the functionality of another particular set of circuitry. For example, the processor 201 in some embodiments provides processing functionality to any of the sets of circuitry, the memory 203 provides storage functionality to any of the sets of circuitry, the communications circuitry 205 provides network interface functionality to any of the sets of circuitry, and/or the like.

In some embodiments, the processor 201 (and/or co-processor or any other processing circuitry assisting or otherwise associated with the processor) is/are in communication with the memory 203 via a bus for passing information among components of the monitoring apparatus 200. In some embodiments, for example, the memory 203 is non-transitory and may include, for example, one or more volatile and/or non-volatile memories. In other words, for example, the memory 203 in some embodiments includes or embodies an electronic storage device (e.g., a computer readable storage medium). In some embodiments, the memory 203 is configured to store information, data, content, applications, instructions, or the like, for enabling the monitoring apparatus 200 to carry out various functions in accordance with example embodiments of the present disclosure. In some embodiments, the memory 203 is embodied as, or communicates with, a data store 102 as shown in FIG. 1 and described herein.

The processor 201 may be embodied in a number of different ways. For example, in some example embodiments, the processor 201 includes one or more processing devices configured to perform independently. Additionally, or alternatively, in some embodiments, the processor 201 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the monitoring apparatus 200, and/or one or more remote or "cloud" processor(s) external to the monitoring apparatus 200.

In an example embodiment, the processor 201 is configured to execute instructions stored in the memory 203 or otherwise accessible to the processor. Additionally, or alternatively, the processor 201 in some embodiments is configured to execute hard-coded functionality. As such, whether configured by hardware or software methods, or by a combination thereof, the processor 201 represents an entity (e.g., physically embodied in circuitry) capable of performing operations according to an embodiment of the present disclosure while configured accordingly. Additionally, or alternatively, as another example in some example embodiments, when the processor 201 is embodied as an executor of software instructions, the instructions specifically configure the processor 201 to perform the algorithms embodied in the specific operations described herein when such instructions are executed.

As one particular example embodiment, the processor 201 is configured to perform various operations associated with monitoring valve positions, including controlling activation of sensors (e.g., accelerometers, gyroscopes, magnetometers, and/or the like), controlling energy harvesting and battery charging operations, initiating self-calibration operations, and/or the like. In some embodiments, the processor 201 includes hardware, software, firmware, and/or a combination thereof, that transition one or more sensors from an inactive state to an active state in response to detection of valve motion. Additionally, or alternatively, in some embodiments, the processor 201 includes hardware, software, firmware, and/or a combination thereof, that monitor battery levels and control charging of one or more batteries via energy harvesters, such as TEGs, VEHS, and/or the like. Additionally, or alternatively, in some embodiments, the processor 201 includes hardware, software, firmware, and/or a combination thereof, that initiate self-calibration operations to cause the position estimation circuitry 211 to generate and store an initial position of a valve, sensor, system, and/or the like.

In some embodiments, the monitoring apparatus 200 includes input/output circuitry 207 that provides output to the user and, in some embodiments, to receive an indication of a user input. For example, the input/output circuitry 207 provides output to and receives input from one or more computing devices 115. In another example, the input/output circuitry 207 provides output to one or more remote computing environments 117. In one example, the input/output circuitry 207 receives, from a computing device 115, a request to provision sensor measurements 104, position data 106, valve data, 108, and/or the like. In another example, the input/output circuitry 207 receives, from a computing device 115, a command to initiate a self-calibration operation for determining an initial position of a valve and/or sensor system in response to attachment of the sensor system to the valve. In some embodiments, the input/output circuitry 207 is in communication with the processor 201 to provide such functionality.

The input/output circuitry 207 may comprise one or more user interface(s) and in some embodiments includes a display that comprises the interface(s) rendered as a web user interface, an application user interface, a user device, a backend system, or the like. In some embodiments, the input/output circuitry 207 also includes a keyboard, a mouse, a joystick, a touch screen, touch areas, soft keys a microphone, a speaker, and/or other input/output mechanisms. The processor 201 and/or input/output circuitry 207 comprising the processor may be configured to control one or more functions of one or more user interface elements through computer program instructions (e.g., software and/or firmware) stored on a memory accessible to the processor (e.g., memory 203, and/or the like). In some embodiments, the input/output circuitry 207 includes or utilizes a user-facing application to provide input/output functionality to a computing device 115 and/or other display associated with a user.

In some embodiments, the monitoring apparatus 200 includes communications circuitry 205. The communications circuitry 205 includes any means such as a device or circuitry embodied in either hardware or a combination of hardware and software that is configured to receive and/or transmit data from/to a network and/or any other device, circuitry, or module in communication with the monitoring apparatus 200. In this regard, in some embodiments the communications circuitry 205 includes, for example, a network interface for enabling communications with a wired or wireless communications network, such as the network 118 shown in FIG. 1 and described herein. Additionally, or alternatively in some embodiments, the communications circuitry 205 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 205 includes circuitry for interacting with the antenna(s) and/or other hardware or software to cause transmission of signals via the antenna(s) or to handle receipt of signals received via the antenna(s). In some embodiments, the communications circuitry 205 enables transmission to and/or receipt of data from data stores 102, computing devices 115, remote computing environments 117, and/or the like. For example, the communications circuitry 205 m ay enable provision of sensor measurements 104, position data 106, valve data 108, and/or the like to computing devices and remote computing environments.

The measurement processing circuitry 209 includes hardware, software, firmware, and/or a combination thereof, that receive, store, and perform calculations on sensor measurements 104. For example, in some embodiments, the measurement processing circuitry 209 includes hardware, software, firmware, and/or a combination thereof, that receive accelerometer measurements, gyroscope measurements, magnetometer measurements, and/or the like and cause storage thereof in the memory 203. Additionally, or alternatively, in some embodiments, the measurement processing circuitry 209 includes hardware, software, firmware, and/or a combination thereof, that compare sensor measurements 104 to one or more thresholds and, based on the comparisons, determine whether the valve to which the sensor system is attached is in motion. Additionally, or alternatively, in some embodiments, the measurement processing circuitry 209 includes hardware, software, firmware, and/or a combination thereof, that filter and/or clean sensor measurements 104, such as by removing data points representative of interference, outlier events, noise, and/or the like. Additionally, or alternatively, in some embodiments, the measurement processing circuitry 209 includes hardware, software, firmware, and/or a combination thereof, that receive, store, and cause provision of sensor measurements associated with a local environment comprising the valve, such as measurements of temperature, pressure, acoustics, vibration, humidity, and/or the like. In some embodiments, measurement processing circuitry 209 includes a separate processor, specially configured field programmable gate array (FPGA), and/or a specially programmed application specific integrated circuit (ASIC).

The position estimation circuitry 211 includes hardware, software, firmware, and/or a combination thereof, that supports various functionality associated with measuring the position of a valve, including generating position data based at least in part on sensor measurements and estimating a current position of the valve based at least in part on the position data. In some embodiments, the position estimation circuitry 211 includes hardware, software, firmware, and/or any combination thereof, that process and combine accelerometer measurements, gyroscope measurement, magnetometer measurements, and/or the like to generate values of roll, pitch, and yaw angle. For example, the position estimation circuitry 211 may perform gradient descent operations, normalization operations, quaternion generation and integration operations, and/or the like to generate vector-valued functions (e.g., Jacobians and/or the like) by which the pitch, roll, and yaw of the sensor system and attached valve may be estimated. In some embodiments, the position estimation circuitry 211 includes hardware, software, firmware, and/or any combination thereof, that perform angle derivative constraint, drift removal, change rate averaging, and other operations to suppress sudden spikes, remove outliers, and smooth the values of roll, pitch, and/or yaw angle. In some embodiments, the position estimation circuitry 211 includes hardware, software, firmware, and/or any combination thereof, that generate and update rotation matrices that are representative of valve position in a measurement frame. In some embodiments, the position estimation circuitry 211 includes a separate processor, specially configured field programmable gate array (FPGA), and/or a specially programmed application specific integrated circuit (ASIC).

Additionally, or alternatively, in some embodiments, two or more of the processor 201, memory 203, communications circuitry 205, input/output circuitry 207, measurement processing circuitry 209, and/or position estimation circuitry 211. Additionally, or alternatively, in some embodiments, one or more of the sets of circuitry perform some or all of the functionality described associated with another component. For example, in some embodiments, two or more of the sets of circuitry 201-2111 are combined into a single module embodied in hardware, software, firmware, and/or a combination thereof. Similarly, in some embodiments, one or more of the sets of circuitry, for example the measurement processing circuitry 209, and/or position estimation circuitry 211 is/are combined with the processor 201, such that the processor 201 performs one or more of the operations described above with respect to each of these sets of circuitry 207-211.

## EXAMPLE DATA ARCHITECTURES AND DATA FLOWS OF THE DISCLOSURE

Having described example systems and apparatuses in accordance with embodiments of the present disclosure, example data flows and architectures of data in accordance with the present disclosure will now be discussed. In some embodiments, the systems and/or apparatuses described herein maintain data environment(s) that enable the data flows in accordance with the data architectures described herein. For example, in some embodiments, the systems and/or apparatuses described herein function in accordance with the data flows depicted in and described herein with respect to FIGS. 4-7 and 5. In some embodiments, the data architectures depicted and/or described with respect to FIG. 3 are performed or maintained via the sensor system 101. For example, the data architectures may be performed or maintained by one or more specially configured monitoring apparatuses 200.

FIG. 3 illustrates an example data architecture 300 in accordance with at least some example embodiments of the present disclosure. Specifically, FIG. 3 illustrates a data architecture 300 for a portion of data included in or associated with valve positioning monitoring techniques and systems in accordance with at least some embodiments of the present disclosure.

As illustrated, the sensor measurements 104 may include outputs generated by sensors of the sensor system 101, such as accelerometers 111, gyroscopes 113, magnetometers 114, pressure sensors, temperature sensors, audio sensors, and/or the like. In some embodiments, the sensor measurements 104 include accelerometer measurements 302, gyroscope measurements 304, magnetometer measurements, and/or the like. In some embodiments, the sensor measurements include temperatures, humidity levels, acoustic signals (e.g., intensities, frequencies, and/or the like), pressures, vibration levels, and/or the like. In some embodiments, a respective sensor measurement 104 includes metadata including creation timestamp, sensor identifier, and/or the like.

In some embodiments, accelerometer measurements 302 include values of acceleration in three physical dimensions (e.g., denoted by x, y, and z axes that are orthogonal to one another). For example, an accelerometer measurement 302 may include values $a_x$, $a_y$, and $a_z$ that respectively correspond to acceleration measured along the three axes, and from which a linear acceleration vector may be estimated. In some embodiments, gyroscope measurements 304 includes values of angular velocity in the three dimensions. For example, an accelerometer measurement 302 may include values $g_x$, $g_y$, and $g_z$ (e.g., alternatively represented as $\omega_x$, $\omega_y$, $\omega_z$) that respectively correspond to angular velocity (or change thereof) measured along the three axes. In some embodiments, magnetometer measurements 306 include values of direction, strength, relative change, and/or the like of a magnetic field, such as the magnetic field of a planetary body. For example, a magnetometer measurement may include values that $m_x$, $m_y$, and $m_z$ respectively correspond to magnetic field strength along the three axes.

In some embodiments, a measurement frame 303 is associated with position data 106 that is generated based at least in part on the sensor measurements 104 obtained during the measurement frame 303. In some embodiments, the position data 106 includes quaternions 308. In some embodiments, a quaternion 308 is generated based at least in part on accelerometer measurements, 302, gyroscope measurements, 304, magnetometer measurements 306, and/or the like. For example, a set of quaternions 308 may be generated based at least in part on one or more accelerometer measurements 302, one or more gyroscope measurements 304, and one or more magnetometer measurements 306, respectively. In various embodiments, one or more quaternion 308 encode a spatial orientation and rotation of the sensor system 101 (e.g., and valve portion to which the sensor system 101 is attached). For example, a set of quaternions 308 may describe a current position 322 of a sensor system 101 in accordance with a reference frame (e.g., ECEF frame, ECI frame, and/or the like). In some embodiments, a quaternion 308 encodes an axis-angle rotation of the sensor system 101 and valve portion about an arbitrary axis.

In some embodiments, the position data 106 includes one or more rotation matrices 310. For example, a plurality of rotation matrices 310 may be associated with a plurality of measurement frames 303, respectively. In various embodiments a rotation matrix 310 describes a rotation of the sensor system 101 about one or more axes. In some embodiments, a rotation matrix 310 is generated based at least in part on a plurality of quaternions 308. Additionally, or alternatively, in some embodiments, a rotation matrix 310 is generated based at least in part on accelerometer measurements 302, gyroscope measurements 304, magnetometer measurements, 306, and/or the like. In some embodiments, the rotation matrix 310 represents an angular orientation 312 of the sensor system 101 and connected portion of the valve.

In some embodiments, an angular orientation 312 includes respective values of pitch 314, roll 316, and yaw 318. In some embodiments, an angular orientation 312 is associated with a measurement frame 303. For example, a plurality of measurement frames 303 of a time interval 301 may be associated with respective angular orientations 312 that collectively describe a change in the position of the sensor system 101 over the time interval 301. In some embodiments, the pitch 314, roll 316, and yaw 318 are generated based at least in part on quaternions 308, rotation matrices 310, and/or the like. In some embodiments respective values of pitch 314, roll 316, and yaw 318 embody Euler angles that describe the orientation of the sensor system 101 and valve portion during a measurement frame 303. In some embodiments, position data 106 includes angular change values 320 that describe differences in angular orientation 312 of the sensor system 101 and valve portion between measurement frames 303. For example, an angular change value 320 may comprise one or more values of difference between the respective angular orientations 312 of consecutive measurement frames 303.

In some embodiments, position data 106 includes one or more thresholds, criteria, and/or the like that may be applied in processes for generating valve positions. For example, the position data 106 may include threshold values of accelerometer measurements, gyroscope measurements, and/or the like that are used to determine whether the valve is in motion, denoise measurements, remove outliers, and/or the like. As another example, the position data 106 may include one or more angular constraints to remove sudden spikes from sensor measurements 104 or data derived therefrom.

In some embodiments, valve data 108 includes a current position 322. In some embodiments, the current position 322 describes a position of the sensor system 101 and repositionable portion of a valve in accordance with a time interval 301. In some embodiments, the current position 322 comprises a total rotation of the valve over the time interval 301. For example, the current position 322 may be generated based at least in part on a summation of the angular change values 320 associated with a time interval 301. In this manner, the number of total revolutions of the valve may be accurately represented by the current position 322. Additionally, or alternatively, in some embodiments, the current position 322 includes an angular orientation 312 of the sensor system 101 following a period of motion that defines the time interval 301.

In some embodiments, the valve data 108 includes one or more historical positions 324. In some embodiments, a historical position 324 includes an angular orientation 312 of the sensor system 101 in accordance with an end of the time interval 301. In such contexts, the historical position 324 may be a baseline or initial orientation of the sensor system 101 at initiation of a new time interval 301 associated with further motion of the valve. In some embodiments, the historical position 324 includes historical position data 106 including quaternions 308, rotation matrices 310, angular orientations 312, and/or the like associated with previous time intervals 301 and measurement frames 303.

In some embodiments, the valve data 108 includes one or more valve states 326. In some embodiments, a valve state 326 includes open, closed, connected, disconnected, and/or the like. In some embodiments, a valve state 326 indicates a degree of openness or closure of the valve. For example, a valve state 326 may be a percentile value of occlusion (e.g., 30% open, 50% open, and/or the like). In some embodiments, a valve state 326 indicates one or more channels to which the valve is connected. In various embodiments, the valve state 326 is determined based at least in part on the current position 322.

In some embodiments, the valve data 108 includes one or more identifiers 328 that uniquely identify a sensor system 101, sensor, valve, measurement frame 303, time interval 301, facility, and/or the like. For example, a current position 322 of a valve may include metadata comprising an identifier 328 associated with the valve. As another example, the current position 322 may include metadata comprising an identifier 328 associated with the sensor system 101 that generated the current position 322. In some embodiments, in response to attachment of the sensor system 101 to a valve, the sensor system 101 receives from a computing device 115 one or more identifiers 328 (e.g., valve identifier, facility identifier, and/or the like). Additionally, or alternatively, in some embodiments, the sensor system 101 provisions to a computing device 115 a system identifier, one or more sensor identifiers, and/or the like.

FIG. 4 an example data flow 400. In various embodiments, the data flow 400 indicates an example technique for monitoring valve position via one or more monitoring apparatuses 200 of a sensor system 101. In some embodiments, the data flow 400 includes fusing the accelerometer measurements 302, gyroscope measurements 304, magnetometer measurements 306, and/or the like via an attitude heading and reference system (AHRS) (indicium 401). In some embodiments, the sensor fusion includes generating one or more sets of quaternions 402. For example, the apparatus 200 may generate a plurality of measurement frames, where a respective measurement frame comprises accelerometer measurements 302, gyroscope measurements 304, magnetometer measurements 306 generated within a sampling period. The apparatus 200 may perform sensor fusion to generate a set of quaternions 402 based at least in part on the sensor measurements of the measurement frame. In some embodiments, the apparatus 200 generates one or more accelerometer quaternions, one or more gyroscope quaternions, and/or the like. A respective quaternion 402 may include a four-dimensional number that represents the orientation of a body (e.g., valve) in three-dimensional space. In some embodiments, the sensor fusion compensates for drift in the gyroscope integrations performed to estimate yaw (e.g., attitude). In some embodiments, the sensor fusion provides further advantages including compensati402 on for gyroscopic drift, gyroscope accumulated error, accelerometer delay, accelerometer oversensitivity, magnetic disturbances, and/or the like. In various embodiments, further example aspects of sensor fusion in accordance with the AHRS system are illustrated in FIGS. 5 and 6 and described herein.

In some embodiments, the apparatus 200 generates quaternions 402 in accordance with Equation 1. In Equation 1, B may refer to a current measurement frame and A may refer to an Earth frame (e.g., a measurement frame from initial calibration of the sensor system 101) or a previous measurement frame. Further, $r_x$, $r_y$, and $r_z$ may be components of a unit vector ${}^{A}\hat{r}$ that defines an axis of rotation in accordance with the x, y, and z axes of frame A, where an orientation of frame B relative to frame A may be performed through a rotation of angle $\theta$ around ${}^{A}\hat{r}$ . In some embodiments, the angular orientation in the current measurement frame is generated according to Equation 2, in which the quaternions 402 of frame B may be cross multiplied with i) the vector ${}^{A}v$ defining the axis of rotation in frames A and B, ii) the conjugate ${}^{B}_{A}\hat{q}$ of the quaternions 402. In some embodiments, the angular orientation may be represented a rotation matrix ${}^{A}_{B}R$ in accordance with Equation 3.

$$ {}^{A}_{B}\hat{q} = [q_1, q_2, q_3, q_4] = [\cos\frac{\theta}{2} - r_x \sin\frac{\theta}{2} - r_y \sin\frac{\theta}{2} - r_z \sin\frac{\theta}{2}] \qquad \text{(Equation 1)} $$

$$ {}^{B}v = {}^{A}_{B}\hat{q} * {}^{A}v * {}^{B}_{A}\hat{q} \qquad \text{(Equation 2)} $$

$$ {}^{A}_{B}A = \begin{bmatrix} 1 - 2(q_2^2 + q_3^2) & 2(q_1q_2 - q_0q_3) & 2(q_1q_3 + q_0q_2) \\ 2(q_1q_2 + q_0q_3) & 1 - 2(q_1^2 + q_3^2) & 2(q_2q_3 - q_0q_1) \\ 2(q_1q_3 - q_0q_2) & 2(q_2q_3 + q_0q_1) & 1 - 2(q_1^2 + q_2^2) \end{bmatrix} \quad \text{(Equation 3)} $$

In some embodiments, the data flow 400 includes generating respective values of roll (θ), pitch (φ), and yaw (ψ) based at least in part on the quaternions 402 or rotation matrix derived from the quaternions 402 (indicium 403). In some embodiments, the values of yaw, roll, and pitch embody Euler parameters and are generated in accordance with Equations 4, 5, and 6, respectively.

$$ \psi = \tan^{-1}(2q_2q_3 - 2q_1q_4, 2q_1^2 + 2q_2^2 - 1) \quad \text{(Equation 4)} $$

$$ \theta = \sin^{-1}(2q_2q_4 + 2q_1q_3) \quad \text{(Equation 5)} $$

$$ \varphi = \tan^{-1}(2q_3q_4 - 2q_1q_2, 2q_1^2 + 2q_4^2 - 1) \quad \text{(Equation 6)} $$

In various embodiments, a respective set of roll, pitch, and yaw values is associated with a measurement frame. In some embodiments, the roll, pitch, and yaw values describe an angular orientation of the sensor system 101 over a portion of a time interval comprising the measurement frame. In some embodiments, an angular change value is generated at least in part by differencing the angular orientations of consecutive measurement frames. The total rotation of the sensor system 101 may be generated based at least in part on a summation of the angular change values generated for a time interval comprising the initiation and cessation of valve motion. In some embodiments, the data flow 400 includes applying one or more angle derivative constraints to a roll value, pitch value, yaw value, and/or the like (indicium 405). For example, the apparatus 200 may subtract a first pitch value ($\varphi_1$) from a second pitch value ($\varphi_2$). In response to determining the difference exceeds a threshold value (e.g., 90 degrees or another suitable value), the apparatus 200 may set the difference to zero. In doing so, the apparatus 200 may remove sudden spikes from the output estimations of valve position over a time interval.

In some embodiments, the data flow 400 includes applying gyroscopic thresholding to the position data (e.g., roll, pitch, and yaw angle determination) to remove outliers, drifts, and/or the like (indicium 407). Additionally, or alternatively, in some embodiments, the apparatus 200 compares one or more gyroscopic measurements 304 of a measurement frame to a predetermined threshold. In response to determining the one or more gyroscopic measurements 304 fail to satisfy the predetermined threshold, the apparatus 200 may determine that the valve has not moved during the measurement frame, which may result in suppression or exclusion of the measurement frame from position generation operations. In some embodiments, the data flow 400 includes averaging a yaw change rate across a plurality of measurement frames (or within a measurement frame) to smooth respective transitions between angular orientation estimates (indicium 409).

In some embodiments, the data flow 400 includes generating a position of the sensor system 101 and valve portion following a time interval of motion (indicium 411). For example, the apparatus 200 may generate a total rotation of the sensor system 101 and valve portion based at least in part on the respective angular orientation of the sensor system 101 during the plurality of measurement frames of the time interval. In some embodiments, the data flow 400 includes provisioning the current position of the sensor system 101 and valve to a computing device 115 (indicium 413). For example, the apparatus 200 may provision to the computing device 115 the total rotation of the valve over a time interval of motion. The apparatus 200 may also provision a current angular orientation of the valve at the end of the time interval (e.g., cessation of motion). In some embodiments, the apparatus 200 provisions additional data including environmental measurements (e.g., temperature, pressure, humidity, and/or the like), valve identifiers, sensor identifiers, timestamps of motion, valve state, values of yaw, pitch, and roll, and/or the like. In some embodiments, the data flow 400 includes storing the current position of the valve at a remote computing environment 117 (indicium 415). For example, the computing device 115 may provision the current position of the valve to the remote computing environment 117. Additionally, the computing device 115 may provision environmental measurements, valve identifiers, sensor identifiers, timestamps, valve state, and/or the like to the remote computing environment 117.

FIG. 5 illustrates an example data flow 500 for generating an angular orientation. In various embodiments, the data flow 500 includes generating one or more Jacobians for converting quaternions into Euler Angles. For example, a plurality of Jacobians may be generated via the data flow 500. A first Jacobian may be configured for generating Euler angles based on a first set of quaternions derived from accelerometer measurements. A second Jacobian may be configured for generating Euler angles based on a second set of quaternions derived from gyroscope measurements. A third Jacobian may be configured for generating Euler angles based on a third set of quaternions derived from magnetometer measurements.

In some embodiments, the data flow 500 includes the performance of gradient descent operations on gyroscope measurements 304, accelerometer measurements 302, magnetometer measurements 306, and/or the like to generate or update quaternion representations of the angular orientation of the valve portion and sensor system 101 (indicia 501, 503, 505). In some embodiments, the data flow 500 includes the generation of respective Jacobians for the accelerometer-derived quaternions, gyroscope-derived quaternions, and, optionally magnetometer-derived quaternions (indicium 507).

In some embodiments, the data flow 500 includes generating one or more rates of change based at least in part on the one or more quaternions that were derived from gyroscope measurements. In some embodiments, the data flow 500 includes normalizing the one or more accelerometer measurements and, optionally, the one or more magnetometer measurements. In some embodiments, the data flow 500 includes generating a reference direction of the Earth's magnetic field based at least in part on one or more magnetometer measurements. The reference direction may be used in performance of one or more gradient descent operations. In some embodiments, the gradient descent operations include normalizing the step magnitude of the gradient descent operation. In some embodiments, the respective gradient descent outputs are multiplied by the normalized step magnitude. In some embodiments, the respective gradient descent outputs are applied as feedback to the one or more rates of change. In some embodiments, the rates of change are integrated, respectively, to generate a quaternion representation. In some embodiments, the quaternion representation is normalized.

In some embodiments, respective Euler angles of roll, pitch, and yaw may be generated based at least in part on a rotation matrix and in accordance with Equations 5, 6, and 4, respectively. In some embodiments, the derivation of orientation ${}^S_E q$ from angular rates (e.g., gyroscope measurements, and/or the like) is given by Equation 7. In some embodiments, ${}^S\omega$ is defined in accordance with Equation 8 and denotes the x-, y-, and z-axes of the sensor system 101.

$$ {}^S_E\dot{q} = \frac{1}{2}\,{}^S_E q * {}^S\omega \qquad \text{(Equation 7)} $$

$$ {}^S\omega = [0\ \omega_x\ \omega_y\ \omega_z] \qquad \text{(Equation 8)} $$

In some embodiments, the angular orientation of the reference frame (e.g., ECEF frame, ECI frame, and/or the like) with respect to the reference frame of the sensor system at a time t is given by Equation 9. In some embodiments, the apparatus 200 generates the minimum of the objective function given by $f({}^S_E\hat{q}, E_{\hat{d}}, S_{\hat{s}})$, where ${}^S_E\hat{q}$ is the direction of the magnetic field with reference to the Earth's frame (e.g., ECEF frame, ECI frame, and/or the like), $E_{\hat{d}}$ is the direction of the magnetic field with respect to the reference frame of the sensor system and $S_{\hat{s}}$ is described by Equation 2, where $S_{\hat{s}}$ refers to the fused sensor output. In some embodiments, the apparatus 200 generates the minimum of the objective equation in accordance with Equation 10. In some embodiments, the apparatus 200 applies a gradient descent on Equation 10, the gradient descent being in accordance with Equation 11 in which $\mu$ is the step size of gradient descent. In some embodiments, following the gradient descent operation, the apparatus 200 transforms the output of the gradient descent with respect to the Earth's frame in accordance with Equation 12, where $f({}^S_E\hat{q}, E_{\hat{d}}, S_{\hat{s}})$ is given by Equation 13.

$$ {}^S_E q_{\omega,t} = {}^S_E\hat{q}_{\omega,t} + {}^S_E\dot{q}_{\omega,t}\Delta t \qquad \text{(Equation 9)} $$

$$ \min_{{}^S_E\hat{q}\in R^4} f({}^S_E\hat{q}, E_{\hat{d}}, S_{\hat{s}}) = {}^S_E\hat{q}_{\omega,t} + {}^S_E\dot{q}_{\omega,t}\Delta t \qquad \text{(Equation 10)} $$

$$ {}^S_E q_{k+1} = {}^S_E q_{k+1} - \mu\left(\frac{\nabla f}{\|\nabla f\|}\right) \qquad \text{(Equation 11)} $$

$$ \nabla f({}^S_E\hat{q}, E_{\hat{d}}, S_{\hat{s}}) = J^T({}^S_E\hat{q}, E_{\hat{d}})({}^S_E\hat{q}, E_{\hat{d}}, S_{\hat{s}}) \qquad \text{(Equation 12)} $$

$$f({}^S_E\hat{q}, E_{\hat{d}}, S_{\hat{s}}) = \begin{bmatrix} 2d_x\left(\frac{1}{2} - q_3^2 - q_4^2\right) + 2d_y(q_1q_4 + q_2q_3) + 2d_z(q_2q_4 - q_1q_3) - s_x \\ 2d_x(q_2q_3 - q_1q_4) + 2d_y(\frac{1}{2} - q_2^2 - q_4^2) + 2d_z(q_1q_2 + q_3q_4) - s_y \\ 2d_x(q_1q_3 + q_2q_4) + 2d_y(q_3q_4 - q_1q_2) + 2d_z\left(\frac{1}{2} - q_2^2 - q_3^2\right) - s_z \end{bmatrix}$$

(Equation 13)

In various embodiments, the apparatus 200 generates quaternions based at least in part on the accelerometer measurements 602 in accordance with Equations 9-12 and further in accordance with Equations 14, 15, 16 and 17.

$$^S\hat{a} = [0\ a_x\ a_y\ a_z]$$ (Equation 14)

$$E_{\hat{g}} = [0\ 0\ 0\ 1]$$ (Equation 15)

$$f_g({}^S_E\hat{q},\ {}^S\hat{a}) = \begin{bmatrix} 2(q_2q_4 - q_1q_3) - a_x \\ 2(q_1q_2 + q_3q_4) - a_y \\ 2\left(\frac{1}{2} - q_2^2 - q_3^2\right) - a_z \end{bmatrix}$$ (Equation 16)

$$J_g({}^S_E\hat{q}) = \begin{bmatrix} -2q_3 & 2q_4 & -2q_1 & 2q_2 \\ 2q_2 & 2q_1 & 2q_4 & 2q_3 \\ 0 & -4q_2 & -4q_3 & 0 \end{bmatrix}$$ (Equation 17)

FIG. 6 illustrates an example data flow 600 for generating an angular orientation of a sensor system. In various embodiments, the data flow 600 depicts working principles of one or more techniques for generating an angular orientation. For example, the data flow 600 may provide an orientation filter for multi-sensor arrays, such as a Madgwick filter. In some embodiments, techniques depicted in the data flow 600 include normalizing accelerometer measurements and gyroscope measurements and performing gradient descent operations for the respective measurement types (e.g., accelerometer, gyroscope, and magnetometer). In some embodiments, the techniques include fusing the output of the gradient descent operation for accelerometer measurements with the output of the gradient descent step for magnetometer measurements. In some embodiments, the fusion of accelerometer and gyroscope data is combined with the output of the gradient descent step of the gyroscope measurements. In some embodiments, the sensor fusion is integrated with respect to time to obtain a current estimate of angular orientation. In some embodiments, the output of the integration is normalized and leveraged with new sensor measurements to generate a subsequent position.

In some embodiments, the data flow 600 includes performing a gradient descent operation on one or more magnetometer measurements (indicium 603). In some embodiments, the data flow 600 includes performing a gradient descent operation on one or more accelerometer measurements (indicium 606). In some embodiments, a first angular orientation of the sensor system 101 is generated based at least in part on accelerometer measurements and magnetometer measurements (e.g., if present). In some embodiments, the data flow 600 includes performing a normalization operation on the first angular orientation (indicium 609). In some embodiments, a second angular orientation of the sensor system 101 is generated based at least in part on gyroscope measurements.

In some embodiments, the data flow 600 includes generating a second estimate of angular orientation based at least in part on gyroscope measurements (operation 612). In some embodiments, the data flow 600 includes generating and integrating over one or more quaternions that represent rotation of the sensor system 101 relative to the Earth's frame (e.g., a quaternion that rotates the Earth's frame to an orientation of minimal difference relative to the reference frame of the sensor) (indicium 615). In some embodiments, the data flow 600 includes normalizing the quaternion (618). In various embodiments, the quaternion is estimated based at least in part on the first and second estimations of angular orientation. In some embodiments, the data flow 600 includes generating a fused estimation of angular orientation based at least in part on the first and second estimates of angular orientation (indicium 621). In various embodiments, respective values of pitch, roll, and yaw are derived from the fused estimation of rotation.

FIG. 7 illustrates an example diagram of valve position monitoring. In some embodiments, the sensor system 101 is attached to a repositionable portion 700 of a valve 150. For example, the valve 150 may be attached to valve handle, valve stem, and/or the like via magnetic interaction, adhesives, fasteners, snap-fittings, and/or the like. In some embodiments the sensor system 101 is attached to a center of the valve handle that is in alignment with an axis of rotation of the valve handle. Alternatively, in some embodiments, the sensor system 101 is attached to the valve handle, valve stem, and/or the like in a region off-center from the axis of rotation. In some embodiments, the sensor system 101 is configured to generate power and/or recharge one or more internal batteries via energy harvesting. For example, the sensor system 101 may be powered or recharged based at least in part on harvesting on solar energy, vibrational energy, thermal energy, and/or the like.

In some embodiments, the sensor system 101 measures the motion of the valve 150 and generates a position of the valve 150 during or following valve motion. In some embodiments, the sensor system 101 provisions the position of the valve 150 to a computing device 115 for logging. Additionally, in some embodiments, the sensor system 101 provisions one or more environmental measurements including temperature, pressure, humidity, vibration, acoustics, and/or the like. The computing device 115 may be located proximate to or within a facility comprising the valve 150 and sensor system 101. For example, the computing device 115 may be within range of the sensor system 101 such that valve position and other data may be transmitted by the sensor system 101 via Bluetooth communication. In some embodiments the computing device 115 provisions the valve position, position log, and/or the like to a remote computing environment 117. For example, the computing device 115 may store the valve position, position log, and/or the like in a cloud storage service.

EXAMPLE PROCESSES OF THE DISCLOSURE

Having described example systems and apparatuses, data architectures, and data flows, in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

FIG. 8 illustrates a flowchart depicting operations of an example process for valve position monitoring in accordance with at least some example embodiments of the present disclosure. Specifically, FIG. 8 depicts operations of an example process 800. In some embodiments, the process 800 is embodied by computer program code stored on a non-transitory computer-readable storage medium of a computer program product configured for execution to perform the process as depicted and described. Additionally, or alternatively, in some embodiments, the process 800 is performed by one or more specially configured computing devices, such as the monitoring apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with one or more computing devices 115, one or more remote computing environments 117, an/or the like.

In some embodiments, the process 800 includes attaching the apparatus 200 to a valve. For example, a sensor system 101 comprising the apparatus 200 may be attached to a repositionable portion of a valve, such as a handle that is configured to control the valve or a stem connected to the handle. In some embodiments, the apparatus 200 is attached to the valve via magnetic interaction. For example, the sensor system 101 comprising the apparatus 200 may include one or more magnetic elements configured to secure the sensor system 101 to a ferromagnetic portion of the valve. In some embodiments, the apparatus 200 is attached to the valve using one or more fastener systems including screws, brackets, snap-fittings, and/or the like. Additionally, or alternatively, in some embodiments, the apparatus 200 is attached to the valve via adhesives. In various embodiments, the present techniques enable valve position monitoring using a single apparatus attached to the valve. For example, whereas previous approaches typically require attachment of sensor elements to a static portion and a repositionable portion of a valve, the present techniques may provide valve monitoring capabilities by attachment of an apparatus to the repositionable portion alone. In this manner, the resource costs and complexity of retrofitting valves for position monitoring may be reduced.

At operation 806, the apparatus 200 optionally includes means such as the measurement processing circuitry 209, the position estimation circuitry 211, the communications circuitry 205, the input/output circuitry 207, the processor 201, and/or the like, or a combination thereof, that generate an initial position of the valve. For example, the apparatus 200 may generate an initial position of the valve based at least in part on one or more sensor measurements including accelerometer measurements, gyroscope measurements, magnetometer measurements, and/or the like. In some embodiments, the apparatus 200 generates an initial position of the valve in response to being attached to the valve. For example, the apparatus 200 may determine that the sensor system 101 comprising the apparatus 200 has been attached to the valve via a magnet element, fastener, adhesive, and/or the like. In response to the determination, the apparatus 200 may transition an accelerometer, gyroscope, magnetometer, and/or the like from an inactive state to an active state. The accelerometer, gyroscope, magnetometer, and/or the like may generate measurements based upon which the apparatus 200 generates an initial position of the valve.

In some embodiments, the initial position includes an initial angular orientation of the valve, the sensor system 101 attached to the valve, and/or the like. For example, the initial position may include an initial orientation of the valve as defined along a three-dimensional coordinate system (e.g., x-, y-, and z-directions orthogonal to one another). In some embodiments, the apparatus 200 generates a three-dimensional vector representative of the initial angular orientation based at least in part on accelerometer measurements, gyroscope measurements, magnetometer measurements, and/or the like.

In some embodiments, the apparatus 200 stores the initial position of the valve generated at the instance of installation as a persistent reference position. For example, the sensor system 101 comprising the apparatus 200 may be attached to the valve while the valve is configured to a position associated with a particular valve status (e.g., a status of valve closed, valve open, valve connected, valve disconnected, or a particular valve flow rate). The apparatus 200 may store the initial position in association with the valve status such that subsequent repositioning of the valve may be used to define a transition from the initial valve status to another status. Alternatively, in some embodiments, the apparatus 200 resets the initial position of the valve based at least in part on a position of the valve generated following a time interval of valve motion. For example, following operation 824, the apparatus 200 may reset the initial position of the valve based at least in part on the valve position generated following a first time interval of motion. In doing so, the generation of a new valve position during a subsequent time interval of motion may be based at least in part on the position of the valve generated in accordance with the first time interval of motion.

At operation 806, the apparatus 200 optionally includes means such as the measurement processing circuitry 209, the position estimation circuitry 211, the communications circuitry 205, the input/output circuitry 207, the processor 201, and/or the like, or a combination thereof, that determine whether the valve is in motion. For example, the apparatus 200 may determine whether the valve is in motion. In such contexts, "in motion" may refer to angular movements of the valve that satisfy one or more predetermined thresholds configured to exclude valve micromotions, which may be caused by vibration, shocks, temperature changes, and/or the like. In some embodiments, the apparatus 200 generates one or more sensor measurements on a predetermined sampling basis (e.g., 1 Hz to 6.7 kHz, or another suitable sampling value) and determines whether one or more sensor measurement satisfies one or more thresholds. For example, the apparatus 200 may generate accelerometer measurements via an ultra-low power, always-on accelerometer, and/or the like. The apparatus 200 may determine that the valve is in motion in response to an accelerometer measurement satisfying a predetermined threshold of linear acceleration.

Alternatively, or additionally, in some embodiments, the apparatus 200 generates one or more gyroscope measurements on a predetermined sampling basis and determines whether one or more gyroscope measurements satisfy a predetermined threshold of angular velocity in one or more directions. For example, the apparatus 200 may compare gyroscope measurements to a predetermined threshold to detect an instance in which the valve is being repositioned. The apparatus 200 may define an initial point of a time interval of motion based at least in part on the instance in which one or more threshold-satisfying gyroscope measurements are generated. for example, the apparatus 200 may determine that the valve is in motion in response to determining that two or more consecutive gyroscope measurements satisfy a predetermined threshold. In some embodiments, the apparatus 200 determines that a valve is no longer in motion in response to determining that one or more gyroscope measurements and/or other sensor measurements fail to satisfy one or more predetermined thresholds. For example, the apparatus 200 may define an expiration of the time interval of motion in response to determining that two or more consecutive gyroscope measurements fail to satisfy a predetermined threshold.

In some embodiments, in response to the apparatus 200 determining that the valve is in motion, the process 800 proceeds to operation 812. In some embodiments, the process 800 includes repeating operation 809 until the valve is determined to be in motion. In some embodiments, the apparatus 200 continues to perform the operation 809 in parallel to one or more operations of the process 800. For example, the apparatus 200 may perform the operation 809 repeatedly in parallel to any of operations 812-821 to determine when the valve is no longer in motion, which may indicate the expiration of the time interval of motion during which the apparatus 200 tracks the repositioning of the valve. In some embodiments, in response to determining the valve is no longer in motion following an initial determination that the valve is in motion, the apparatus 200 performs operation 824 to generate a position of the valve in accordance with the detected time interval of motion.

At operation 809, the apparatus 200 optionally includes means such as the measurement processing circuitry 209, the position estimation circuitry 211, the communications circuitry 205, the input/output circuitry 207, the processor 201, and/or the like, or a combination thereof, that transition one or more sensors from an inactive state to an active state. For example, the apparatus 200 may transition one or more accelerometers, gyroscopes, magnetometers, environmental measurement sensors, and/or the like from an inactive state to an active state in response to a determination that one or more sensor measurements satisfy one or more predetermined thresholds. In this manner, power consumption of the sensors may be conserved for instances in which the valve is being repositioned. For example, the apparatus 200 may conserve sensor power consumption by configuring sensors to an inactive state until detecting an instance in which an accelerometer, gyroscope, and/or the like generates two or more consecutive sensor measurements that satisfy a predetermined threshold.

At operation 812, the apparatus 200 includes means such as the measurement processing circuitry 209, the position estimation circuitry 211, the communications circuitry 205, the input/output circuitry 207, the processor 201, and/or the like, or a combination thereof, that generate a plurality of measurement frames. For example, the apparatus 200 may generate a plurality of measurement frames in which a respective measurement frame comprises one or more accelerometer measurements, gyroscope measurements, magnetometer measurements, and/or the like. In some embodiments, the apparatus 200 generates a respective measurement frame based at least in part one sensor measurements generated within a predetermined sampling period. For example, a measurement frame may include accelerometer measurements, gyroscope measurements, magnetometer measurements, and/or the like that were generated in accordance a sampling period, such as 20 milliseconds, or another suitable duration.

In some embodiments, an initial measurement frame (is in accordance with a period in which the apparatus 200 determines the valve to be in motion. In some embodiments, a terminal measurement frame is in accordance with an period in which the apparatus 200 determines that the valve is no longer in motion. For example, the time interval over which the plurality of measurements frames are generated may comprise a period ranging from an instance of motion detection to an instance of motion cessation. An initial measurement frame and a terminal measurement frame may be, respectively, a first measurement frame and a last measurement frame of the plurality of measurement frames. The measurements for a respective measurement frame may include one or more accelerometer measurements, one or more gyroscope measurements, and, optionally, one or more magnetometer measurements. Additionally, in some embodiments, a respective measurement frame includes environmental measurements including temperature, pressure, acoustics, humidity, vibration, and/or the like.

The apparatus 200 may perform operation 212 in parallel to performance of operations 813A, 813B, 813C, and/or the like. At operations 813A, 813B, and, optionally, 813C, respectively, the apparatus 200 includes means such as the measurement processing circuitry 209, the position estimation circuitry 211, the communications circuitry 205, the input/output circuitry 207, the processor 201, and/or the like, or a combination thereof, that generate sensor measurements. For example, over the time interval the apparatus 200 may generate accelerometer measurements (operation 813A), gyroscope measurements (operation 813B), and, optionally, magnetometer measurements (operation 813C).

At operation 815, the apparatus 200 optionally includes means such as the measurement processing circuitry 209, the position estimation circuitry 211, the communications circuitry 205, the input/output circuitry 207, the processor 201, and/or the like, or a combination thereof, that generate environmental measurements. For example, the apparatus 200 may generate environmental measurements including temperatures, pressures, humidity levels, acoustics, vibrations, and/or the like. In various embodiments, the apparatus 200 generates the environmental measurements over the time interval in which the plurality of measurement frames are generated. For example, a respective measurement frame may include one or more environmental measurements. In some embodiments, the apparatus 200 generates one or more environmental metrics based at least in part on environmental measurements generated over the time interval. The metrics may include averaged values, change rates, deviations from a threshold or baseline value, and/or the like.

At operation 818, the apparatus 200 includes means such as the measurement processing circuitry 209, the position estimation circuitry 211, the communications circuitry 205, the input/output circuitry 207, the processor 201, and/or the like, or a combination thereof, that generative respective position data for the plurality of measurement frames. For example, the apparatus 200 may generate position data for a respective measurement frame based at least in part on accelerometer measurements, gyroscope measurements, magnetometer measurements, and/or the like that are associated with the measurement frame. In some embodiments, the apparatus 200 generates the position data based at least in part on sensor fusion techniques described herein and shown in the accompanying figures. For example, the apparatus 200 may generate position data according to the data flows 400, 500, 600 shown in FIGS. 4, 5, and 6, respectively, and described herein.

In some embodiments, the position data includes an angular orientation of the valve. For example, the position data may include a set of Euler angles that represent a three-dimensional position of the valve, sensor system, and/or the like. The set of Euler angles may describe the roll, pitch, and yaw of the sensor system, valve, and/or the like in accordance with an attitude heading and reference system (AHRS). For example, the apparatus 200 may combine accelerometer measurements, gyroscope measurements, magnetometer measurements, and/or the like in accordance with an AHRS system. In doing so, the apparatus 200 may compensate for abnormalities, errors, noise, and/or the like that may persist in position tracking techniques that rely upon a single measurement type. For example, the sensor fusion may compensate for gyroscopic drift in raw gyroscope measurements.

In some embodiments, the apparatus 200 generates a set of quaternions based at least in part on the fusion of accelerometer measurements, gyroscope measurements, magnetometer measurements, and/or the like. The set of quaternions may encode a rotation to a position vector that describes the rotational orientation of the valve, sensor system, and/or the like during the measurement frame. In some embodiments, the apparatus 200 generates Euler angles of roll, pitch, and yaw based at least in part on the set of quaternions. Additionally, or alternatively, in some embodiments, the apparatus 200 generates a rotation matrix based at least in part on the set of quaternions, Euler angles, and/or the like. For example, the apparatus 200 may generate a set of quaternions describing a current position of the sensor system, valve, and/or the like in accordance with Equation 1, where the output of the equation comprises a three-dimensional position vector. The apparatus 200 may describe the change of the position vector during a measurement frame in accordance with Equation 2. In doing so, the apparatus 200 may derive an additional set of quaternions that describe the angular orientation of the valve in accordance with the measurement frame. In various embodiments, based at least in part on the additional set of quaternions, the apparatus 200 generates a rotation matrix R in accordance with Equation 3, where the rotation matrix may signify the orientation of the valve and enable differencing of the respective angular orientations of the measurement frames (e.g., operation 821).

In some embodiments, in instances where multiple values of roll, pitch, and yaw are generated for a measurement frame (e.g., respective sets of the angle values being generated based on multiple sets of measurements generated during the frame), the apparatus 200 generates one or more mean angle change values over the measurement frame. For example, the apparatus 200 may generate average change values of yaw, pitch, roll, and/or the like over the measurement frame. The mean change values of yaw, pitch, roll, and/or the like may be stored in association with the other values of the corresponding angle for the measurement frame. For example, the apparatus 200 may store a mean change of yaw to the respective values of yaw observed over sampling period in which the measurement frame was generated. In doing so, the apparatus 200 may generate smoother transitions between angles across or within measurement frames.

At operation 821, the apparatus 200 includes means such as the measurement processing circuitry 209, the position estimation circuitry 211, the communications circuitry 205, the input/output circuitry 207, the processor 201, and/or the like, or a combination thereof, that generate a plurality of angular change values. For example, the apparatus 200 may generate a plurality of angular change values based at least in part on the respective position data of the plurality of measurement frames. In some embodiments, the apparatus 200 generates an angular change value based at least in part on the respective position data of consecutive measurement frames. In such contexts, "consecutive" may refer to measurement frames that neighbor one another in a temporal sequence. For example, a time interval may include 1000 milliseconds (ms) and a plurality of measurement frames generated over the time interval may represent, respectively, 20 (ms) sampling periods. In such context, an example pair of consecutive measurement frames may include a first measurement frame associated with an index of 20-40 ms in accordance with the time interval and a second measurement frame associated with an index of 40-60 ms in accordance with the time interval.

In various embodiments, the apparatus 200 generates an angular change value based at least in part on differencing the respective angular orientations (e.g., rotation matrices) of consecutive measurement frames. For example, the apparatus 200 may generate a first angular orientation of the valve in a first measurement frame with index 20-40 ms and a second angular orientation of the valve in a second measurement frame with index 40-60 ms. The apparatus 200 may difference the first angular orientation from the second angular orientation to generate an angular change value in accordance with the first measurement frame and the second measurement frame. For example, an angular orientation of the valve in the first measurement frame may be 70.0 degrees and an angular orientation of the valve in the second measurement frame may be 72.5 degrees. The apparatus 200 may subtract the first angular orientation from the second angular orientation to generate an angular change value of 2.5 degrees. In various embodiments, the apparatus 200 may determine the direction of angular change based at least part on the signum of the difference. For example, rotation in a first direction (e.g., clockwise) may be associated with a signum value of +1, and rotation in a second direction (e.g., anticlockwise) may be associated with a signum value of -1).

At operation 824, the apparatus 200 includes means such as the measurement processing circuitry 209, the position estimation circuitry 211, the communications circuitry 205, the input/output circuitry 207, the processor 201, and/or the like, or a combination thereof, that generate a position of the valve. For example, the apparatus 200 may generate a position of the valve based at least in part on the plurality of measurement frames, position data, angular change values, and/or the like. In some embodiments, the position includes a total rotation of the valve over the time interval. The time interval may span over an initiation of valve rotation and a cessation of valve rotation, each of which may be detected by the apparatus 200.

In some embodiments, the apparatus 200 generates the position of the valve at least in part by summing the angular change values of the plurality of measurement frames. For example, at operation 821, the apparatus 200 may determine a value of angular change between each consecutive pair of measurement frames. The value of angular change may indicate the total rotation of the valve between the respective measurement frames. At operation 824, the apparatus 200 may sum the angular change values to generate a total rotation of the valve. In doing so, the apparatus 200 may generate the current rotation of the valve (e.g., a direction ranging from 0 to 360 degrees) and a total measure of the angular change undergone to arrive at the total rotation, which may exceed 360 degrees. In this manner, the apparatus 200 may enable accurate measurement of valve positions and statuses for valves configured to rotate less than or up 360 degrees (e.g., quarter turn valves and/or the like) and multi-turn valves that are configured to rotate beyond 360 degrees. In some embodiments, the position of the valve includes the direction of the rotation (e.g., clockwise, anticlockwise, and/or the like). For example, the apparatus 200 may generate a direction of rotation based at least in part on the plurality of measurement frames.

At operation 827, the apparatus 200 includes means such as the measurement processing circuitry 209, the position estimation circuitry 211, the communications circuitry 205, the input/output circuitry 207, the processor 201, and/or the like, or a combination thereof, that provision the position of the valve to one or more computing devices. For example, the apparatus 200 may provision the position of the valve to one or more computing devices 115. In doing so, the apparatus 200 may cause the computing device 115 to provision the position of the valve to one or more remote computing environments 117 for position logging. Alternatively, in some embodiments, the apparatus 200 provisions the position of the valve to one or more remote computing environments 117. In some embodiments, the apparatus 200 provisions one or more subsets of the position data to the computing device. For example, the apparatus 200 may provision respective roll, pitch, and yaw values for one or more measurement frames, such as an initial measurement frame and a terminal measurement frame.

In some embodiments, the position includes a total rotation of the valve over the time interval in which the measurement frames were generated. For example, the position may include a total rotation as generated by the apparatus 200 from initial movement of the valve to cessation of valve movement. In some embodiments, the position includes metadata including a valve identifier, sensor system identifier, position timestamps (e.g., rotation start timestamp, rotation stop timestamp, and/or the like), rotation duration, rotation direction, current valve orientation, and/or the like. Additionally, in some embodiments, the apparatus 200 provisions to the computing device 115 one or more environmental measurements associated with an environment comprising the valve. For example, the apparatus 200 may provision to the computing device 115 one or more environmental measurements generated during the time interval of valve movement. In some embodiments, the environmental measurement includes temperature, pressure, humidity, vibration, acoustics, and/or the like.

At operation 830, the apparatus 200 includes means such as the measurement processing circuitry 209, the position estimation circuitry 211, the communications circuitry 205, the input/output circuitry 207, the processor 201, and/or the like, or a combination thereof, that cause an update to one or more position logs based at least in part on the position of the valve generated at operation 824. For example, the apparatus 200 may cause the provision of the position to a remote computing environment 117. In doing so, the apparatus 200 may further cause the remote computing environment 117 to update a position log for the valve based at least in part on the position. In some embodiments, the position provisioned to the remote computing environment 117 includes metadata including one or more position timestamps, valve identifiers, sensor system identifiers, facility identifiers, and/or the like. In some embodiments, the metadata includes a status of the valve based at least in part on the position. For example, the apparatus 200, computing device 115, and/or the like may compare a total rotation of the valve to one or more tables, mappings, and/or the like that relate angular valve position to valve statuses including open valve, closed valve, one or more valve flow rates, one or more channel connections, and/or the like. The apparatus 200 may cause the remote computing environment 117 to update a position log for the valve including the total rotation of the valve movement, current valve angular orientation, current valve status, and/or the like.

At operation 830, the apparatus 200 includes means such as the measurement processing circuitry 209, the position estimation circuitry 211, the communications circuitry 205, the input/output circuitry 207, the processor 201, and/or the like, or a combination thereof, that cause one or more valves to be controlled based at least in part on the position of the valve generated at operation 824. For example, the apparatus 200 may provision the position of the valve to a computing device 115 to cause the computing device to generate and execute one or more commands based at least in part on the position of the valve. In some embodiments, a command includes adjusting the valve associated with the generated position. Additionally, or alternatively, the valve control command includes adjusting one or more valves other than the valve associated with the generated position. For example, in generating and reporting to the computing device 115 the current position of a first valve, the apparatus 200 may cause the computing device 115 to generate and/or execute a command to control (e.g., open, close, or partially rotate) one or more additional valves.

EXAMPLE SENSOR SYSTEM

FIG. 9 shows a top perspective view of an example sensor system 101. In some embodiments, the sensor system 101 includes a housing 103. In some embodiments, the housing 103 includes a cylindrical shape. Alternatively, in some embodiments, the housing 103 may include a prismatic shape, spherical shape, conical shape, and/or the like. In some embodiments, the sensor system 101 includes a frame 901. As further shown in the cross-sections 1100, 1200, one or more batteries, energy sources (e.g., TEG and/or VEHs), and/or the like may be installed within the frame 901. In some embodiments, the housing 103 is positioned over and attached to the frame 901. For example, the housing 103 may be attached to the frame 901 via one or more fasteners 905. Alternatively, or additionally, the housing 103 may be attached to the frame 901 via adhesives, snap-fittings, bayonet fittings, welding, magnetic adapters, and/or the like.

In various embodiments, a longitudinal axis defined by direction line 902A, B indicates a cross-section 1100 shown in FIG. 11.

FIG. 10 shows a bottom perspective view of the sensor system 101. In some embodiments, a bottom surface of the sensor system 101 includes an adapter 1001 configured to attach the sensor system 101 to a repositionable portion of a valve. For example, the adapter 1001 may include one or more magnetic elements such that the sensor system 101 may be secured to a ferromagnetic portion of a valve via magnetic forces. As another example, the adapter 1001 may include one or more voids 1003 through which a fastener may be inserted to attach the sensor system 101 to a bracket, the bracket having been installed onto the repositionable portion of the valve. In some embodiments, the adapter 1001 and the frame 903 are integrally formed. Alternatively, the adapter 1001 may be configured to attach to the frame 903. For example, as further depicted in the cross-section 1100 of FIG. 11, the adapter 1001 may include a screw 1110 and the frame 903 may include a plurality of threads 1112 such that the adapter 1001 may be attached to the frame 903 via a threaded connection. In various embodiments, a transversal axis defined by direction line 1002A, 1002B indicates a cross-section 1200 shown in FIG. 12.

FIG. 11 shows a cross-section 1100 of the sensor system 101. In some embodiments, the housing 103 sheathes a portion of the frame 901. In some embodiments, the frame 901 comprises one or more batteries 105 configured to supply power to various elements the sensor system 101. In some embodiments, the frame 901 includes one or more energy sources configured to generate and provide to the battery 105 electrical energy. For example, the frame 901 may include a TEG 107 configured to transduce thermal energy into electrical energy, which may be used to charge the battery 105.

In some embodiments, the sensor system 101 includes a chamber 1103 in an internal region of the housing 103. In some embodiments, the chamber 1103 includes sensor elements, processing elements, storage elements, communication elements, and/or the like. For example, the chamber 1103 may include one or more printed circuit boards (PCBs) 1101 configured to perform operations described herein for monitoring the position of a valve. In some embodiments, the sensor system 101 includes one or more seals that isolate the chamber 1103 from an external environment. For example, one or more rubberized rings 1105 may be positioned between an internal surface of the housing 103 and a sheathed portion of an external surface of the frame 901 to seal the chamber 1103 from the external environment. In doing so, the electronics of the sensor system 101 may be shielded against intrusion of fluids, dust, and/or the like.

FIG. 12 shows a cross-section of the sensor system 101. In various embodiments, the PCB 1101 comprises one or more sensor elements, processing elements, storage elements, communication elements, and/or the like. For example, the PCB 1101 may include one or more circuitries 201-211 shown in FIG. 2 and described herein. Additionally, or alternatively, the sensor system 101 may include one or more sensor elements, processing elements, storage elements, communication elements, and/or the like separate from the PCB 1101. In some embodiments, the PCB 1101 includes a communication module configured to communicate with one or more computing devices. For example, the PCB 1101 may include a Bluetooth module configured to provision position data, valve data, and/or the like to a computing device.

In some embodiments, the PCB 1101 includes one or more inertial measurement units (IMUs) configured to generate sensor measurements indicative of changes in acceleration, angular velocity, direction, and/or the like. For example, the IMU may include one or more accelerometers, one or more gyroscopes, and/or the like. The IMU may include additional embedded sensors, such as a temperature sensor, pressure sensor, and/or the like. Alternatively, or additionally, in some embodiments, the PCB 1101 includes one or more sensors separate from the IMU. For example, the PCB 1101 may include one or more infrared temperature sensors configured to measure temperatures, thermal profiles, and/or the like of the local environment comprising the valve. As another example, the PCB 1101 may include a separate accelerometer. In some embodiments, the IMU includes a low power, always-on accelerometer, gyroscope, and/or the like, which may be used to detect initial motion of the valve. In response to detection of initial motion, one or more additional sensors of the sensor system 101 (e.g., gyroscopes, accelerometers, magnetometers, and/or the like) may be transitioned to a powered state to generate additional measurements based upon which the position of the valve may be estimated.

In some embodiments, the PCB 1101 includes one or more humidity sensors configured to measure humidity levels in a local environment comprising the valve to which the sensor system 101 is attached. In some embodiments, the PCB 1101 includes one or more audio sensors configured to generate acoustic measurements. For example, the PCB 1101 may include one or microphones configured to record sounds, measure audio levels and frequencies, and/or the like.

In some embodiments, the PCB 1101 includes one or more authentication modules configured to secure communications between the sensor system 101 and one or more computing devices such that control of the sensor system 101 may be limited to authorized users.

FIG. 13A shows a top view of the sensor system 101.

FIG. 13B shows a bottom view of the sensor system 101.

FIG. 13C shows a left-side view of the sensor system 101.

FIG. 13D shows a right-side view of the sensor system 101.

FIG. 13E shows a front view of the sensor system 101.

FIG. 13F shows a back view of the sensor system 101.

## Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g.,

magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

**1.** A method, comprising:

generating, via at least one sensor attached to a valve, a plurality of measurement frames over a time interval, wherein a respective measurement frame comprises at least one accelerometer measurement and at least one gyroscope measurement;
generating respective position data for the plurality of measurement frames based at least in part on the at least one accelerometer measurement and the at least one gyroscope measurement;
generating a plurality of angular change values based at least in part on the respective position data of consecutive measurement frames of the plurality of measurement frames;
generating a position of the valve in accordance with the time interval based at least in part on the plurality of angular change values; and
provisioning the position of the valve to at least one computing device.

**2.** The method of claim 1, wherein:

the position of the valve comprises a total rotation of the valve over the time interval; and
the method further comprises:
summing the plurality of angular change values to generate the total rotation.

**3.** The method of claim 2, wherein:
the position data comprises a roll value, a pitch value, and a yaw value defining an angular orientation of the at least one sensor during the measurement frame.

**4.** The method of claim 3, further comprising:
provisioning at least a subset of the position data to the at least one computing device, wherein the at least a subset of the position data comprises a respective roll value, pitch value, and yaw value for an initial measurement frame and a terminal measurement frame.

**5.** The method of claim 3, wherein:
generating a respective angular change value for comprises differencing the respective roll values, pitch values, and yaw values of consecutive measurement frames.

**6.** The method of claim 5, further comprising:
in response to determining a difference between the respective yaw values satisfies a predetermined threshold, setting the difference between the respective yaw values to zero.

**7.** The method of claim 1, further comprising:

generating at least one gyroscope measurement prior to the time interval; and
generating the plurality of measurement frames over the time interval in response to determining that the at least one gyroscope measurement prior to the time interval satisfies a predetermined threshold.

**8.** The method of claim 1, wherein:

a respective measurement frame further comprises at least one magnetometer measurement; and
the method further comprises:
generating the respective position data for the plurality of measurement frames further based at least in part on the at least one magnetometer measurement.

**9.** The method of claim 8, the method further comprises:

normalizing the at least one magnetometer measurement and the at least one accelerometer measurement;
generating, for the plurality of measurement frames, respective quaternions based at least in part on an integration of the at least one gyroscope measurement, the at least one normalized accelerometer measurement, and the at least one normalized magnetometer measurement;
normalizing the respective quaternions; and
generating the respective position data for the plurality of measurement frames based at least in part on the normalized quaternion.

**10.** The method of claim 1, further comprising:
causing rendering of a graphical user interface (GUI) on a display of the at least one computing device, the GUI comprising the position of the valve.

**11.** The method of claim 1, further comprising:

generating, via the at least one sensor, at least one environmental measurement associated with an environment comprising the valve; and
provisioning the at least one environmental measurement to the at least one computing device.

**12.** The method of claim 11, wherein:
the at least one environmental measurement comprises at least one of temperature, pressure, humidity, vibration, or acoustics.

**13.** An apparatus configured to be installed on a valve, the apparatus comprising:

an accelerometer;
a gyroscope; and
at least one computing device configured to:

generate, via the accelerometer and the gyroscope, a plurality of measurement frames over a time interval, wherein a respective measurement frame comprises at least one accelerometer measurement and at least one gyroscope measurement from the gyroscope;
generate respective position data for the plurality of measurement frames based at least in part on the at least one accelerometer measurement and the at least one gyroscope measurement;
generate a plurality of angular change values based at least in part on differences between the respective position data of consecutive measurement frames of the plurality of measurement frames;
generate a position of the valve in accordance with the time interval based at least in part on the plurality of angular change values; and
provision the position of the valve to at least one computing device.

**14.** The apparatus of claim 13, wherein:

the at least one computing device comprises at least one data store; and
the at least one computing device is further configured to:

generate an initial angular orientation of the valve in response to an installation of the apparatus on the valve;
store the initial angular orientation in the at least one data store; and
generate the position of the valve based at least in part on the plurality of angular change values and the initial angular orientation.

**15.** A computer program product comprising at least one non-transitory, computer-readable storage medium including instructions that, upon execution by at least one processor, configure the computer program product to:

generate a plurality of measurement frames over a time interval, wherein a respective measurement frame comprises at least one accelerometer measurement and at least one gyroscope measurement;
generate respective position data for the plurality of measurement frames based at least in part on the at least one accelerometer measurement and the at least one gyroscope measurement;
generate a plurality of angular change values based at least in part on differences between the respective position data of consecutive measurement frames of the plurality of measurement frames;

generate a position of a valve in accordance with the time interval based at least in part on the plurality of angular change values; and
provision the position of the valve to at least one computing device.

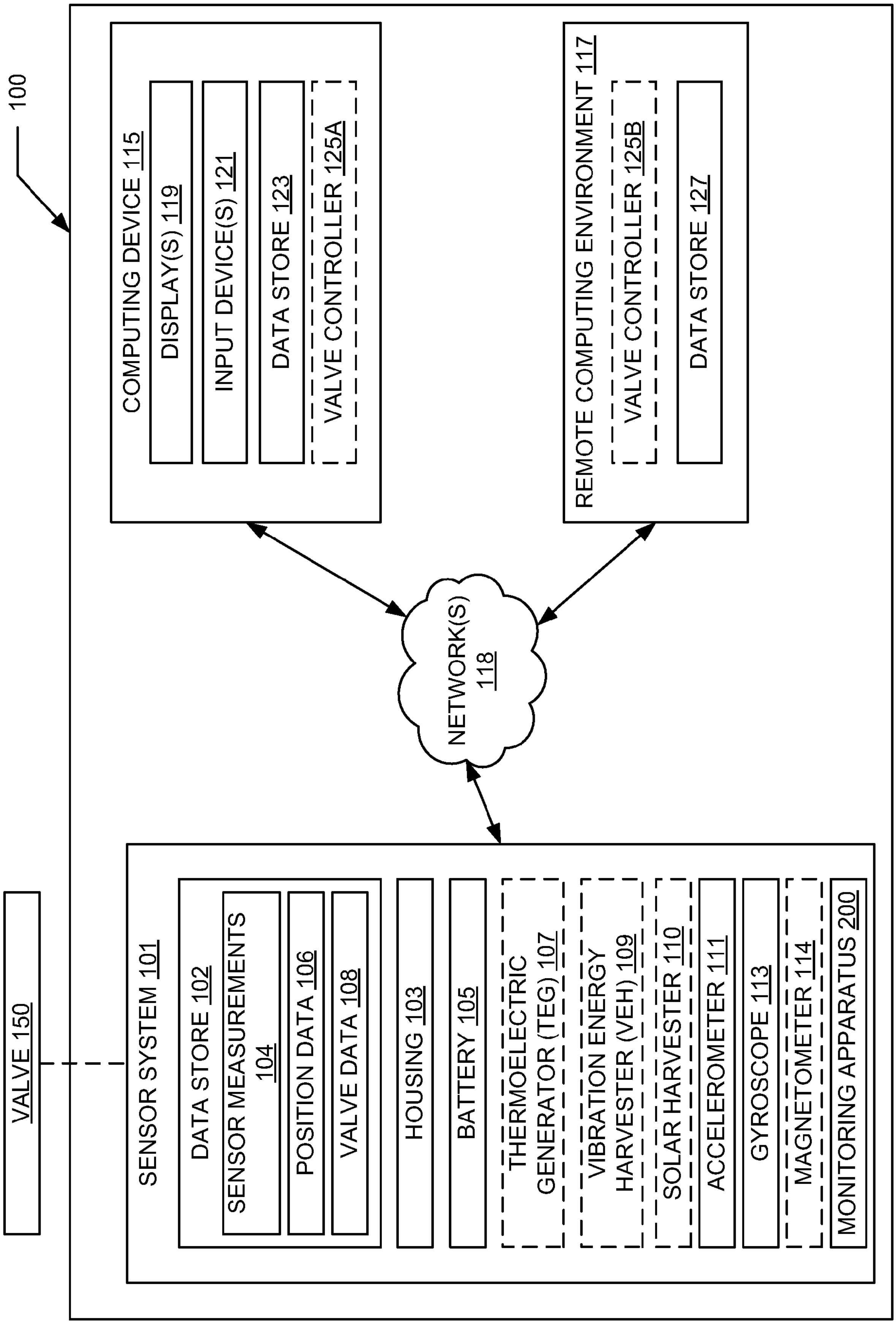
100
COMPUTING DEVICE 115
DISPLAY(S) 119
INPUT DEVICE(S) 121
DATA STORE 123
VALVE CONTROLLER 125A
REMOTE COMPUTING ENVIRONMENT 117
VALVE CONTROLLER 125B
DATA STORE 127
NETWORK(S) 118
VALVE 150
SENSOR SYSTEM 101
DATA STORE 102
SENSOR MEASUREMENTS 104
POSITION DATA 106
VALVE DATA 108
HOUSING 103
BATTERY 105
THERMOELECTRIC GENERATOR (TEG) 107
VIBRATION ENERGY HARVESTER (VEH) 109
SOLAR HARVESTER 110
ACCELEROMETER 111
GYROSCOPE 113
MAGNETOMETER 114
MONITORING APPARATUS 200

FIG. 1

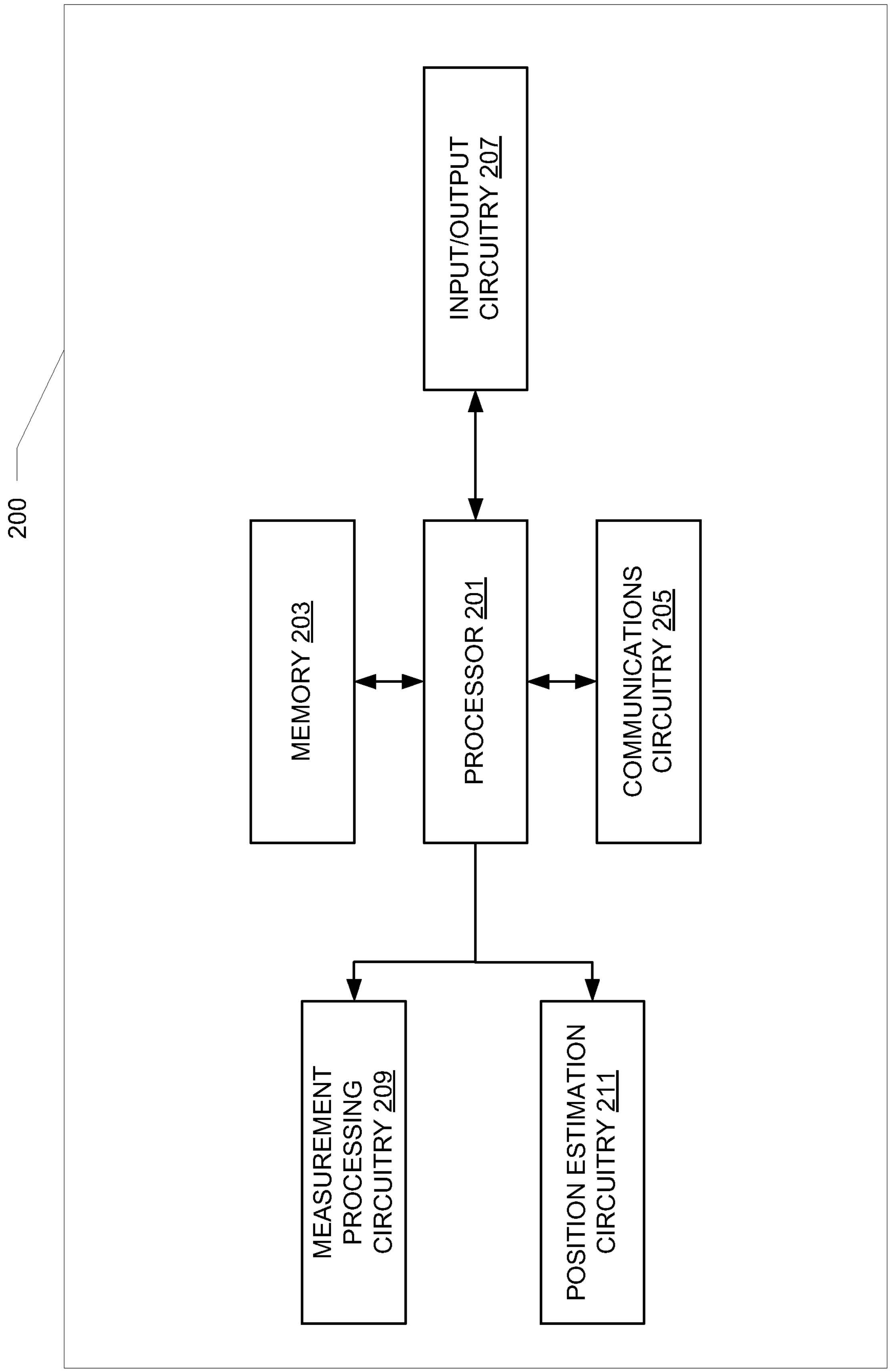
200
INPUT/OUTPUT CIRCUITRY 207
MEMORY 203
PROCESSOR 201
COMMUNICATIONS CIRCUITRY 205
MEASUREMENT PROCESSING CIRCUITRY 209
POSITION ESTIMATION CIRCUITRY 211

FIG. 2

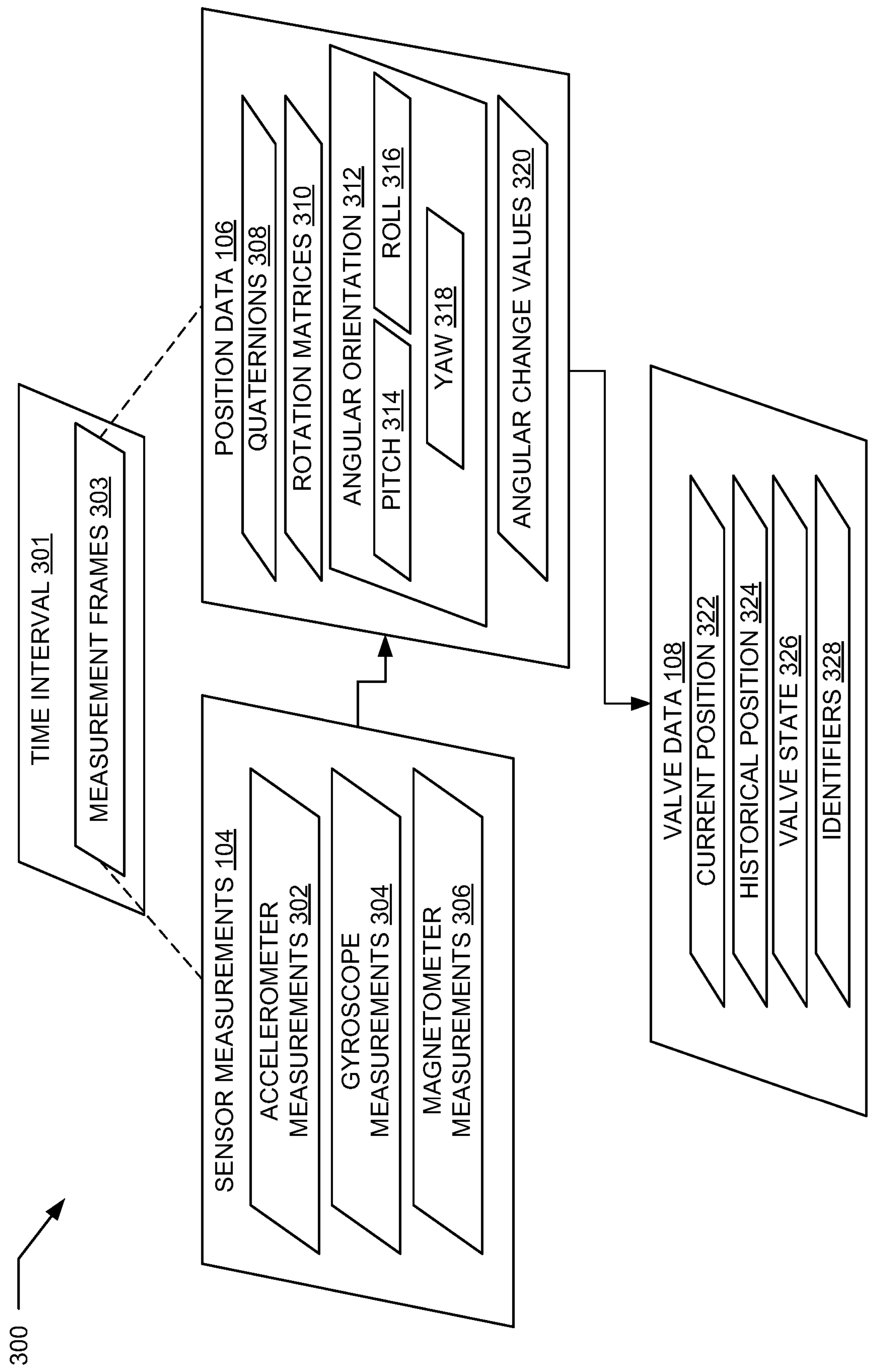
300
TIME INTERVAL 301
MEASUREMENT FRAMES 303
SENSOR MEASUREMENTS 104
ACCELEROMETER MEASUREMENTS 302
GYROSCOPE MEASUREMENTS 304
MAGNETOMETER MEASUREMENTS 306
POSITION DATA 106
QUATERNIONS 308
ROTATION MATRICES 310
ANGULAR ORIENTATION 312
PITCH 314
ROLL 316
YAW 318
ANGULAR CHANGE VALUES 320
VALVE DATA 108
CURRENT POSITION 322
HISTORICAL POSITION 324
VALVE STATE 326
IDENTIFIERS 328

FIG. 3

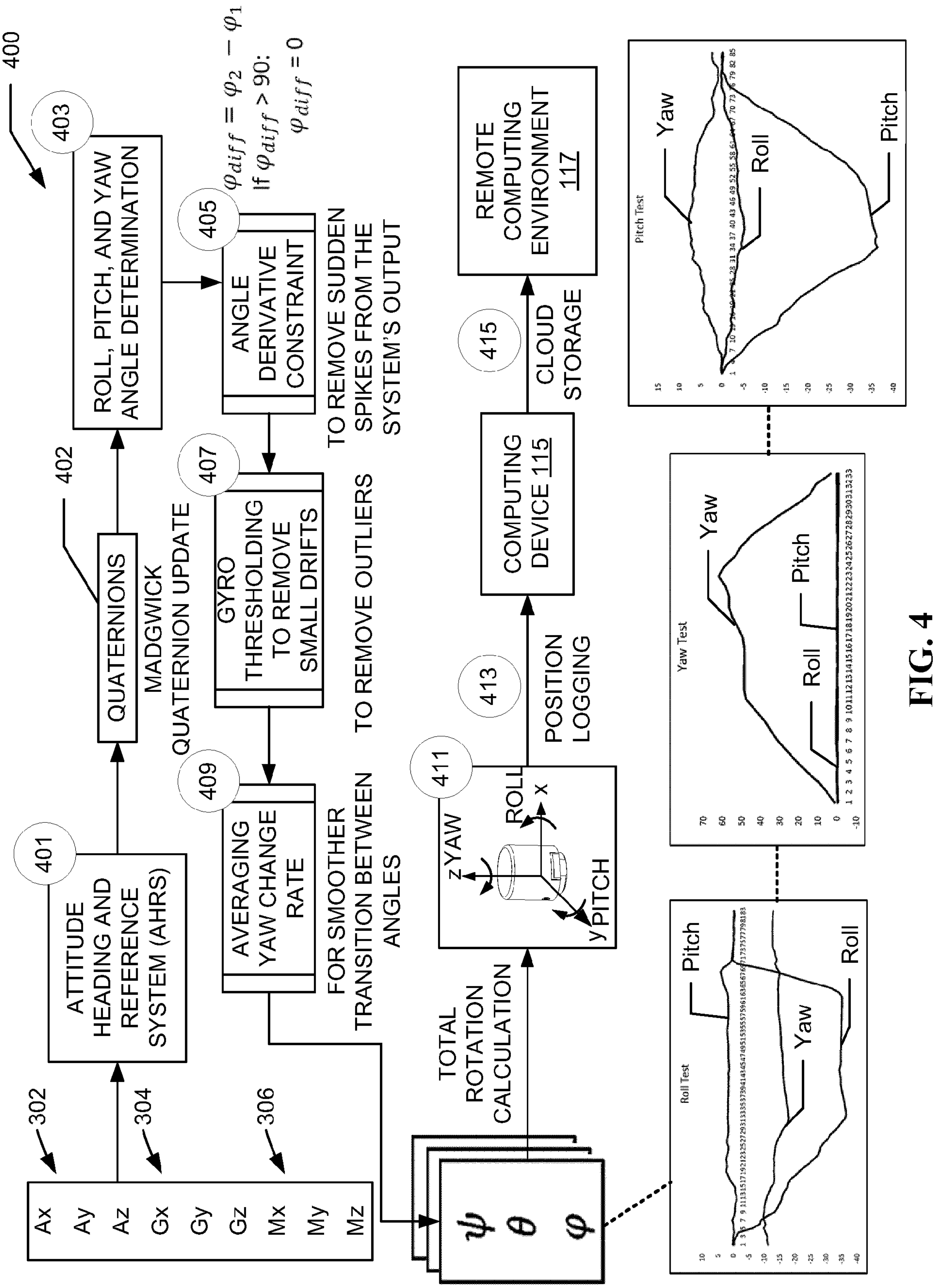
400
Ax Ay Az Gx Gy Gz Mx My Mz
302
304
306
401
ATTITUDE HEADING AND REFERENCE SYSTEM (AHRS)
QUATERNIONS
402
MADGWICK QUATERNION UPDATE
403
ROLL, PITCH, AND YAW ANGLE DETERMINATION
405
ANGLE DERIVATIVE CONSTRAINT
$\varphi_{diff} = \varphi_2 - \varphi_1$
If $\varphi_{diff} > 90$:
$\varphi_{diff} = 0$
TO REMOVE SUDDEN SPIKES FROM THE SYSTEM'S OUTPUT
407
GYRO THRESHOLDING TO REMOVE SMALL DRIFTS
TO REMOVE OUTLIERS
409
AVERAGING YAW CHANGE RATE
FOR SMOOTHER TRANSITION BETWEEN ANGLES
$\psi$ $\theta$ $\varphi$
TOTAL ROTATION CALCULATION
411
z YAW
ROLL x
y PITCH
413
POSITION LOGGING
COMPUTING DEVICE 115
415
CLOUD STORAGE
REMOTE COMPUTING ENVIRONMENT 117
Roll Test
Pitch
Yaw
Roll
Yaw Test
Yaw
Pitch
Roll
Pitch Test
Yaw
Roll
Pitch

FIG. 4

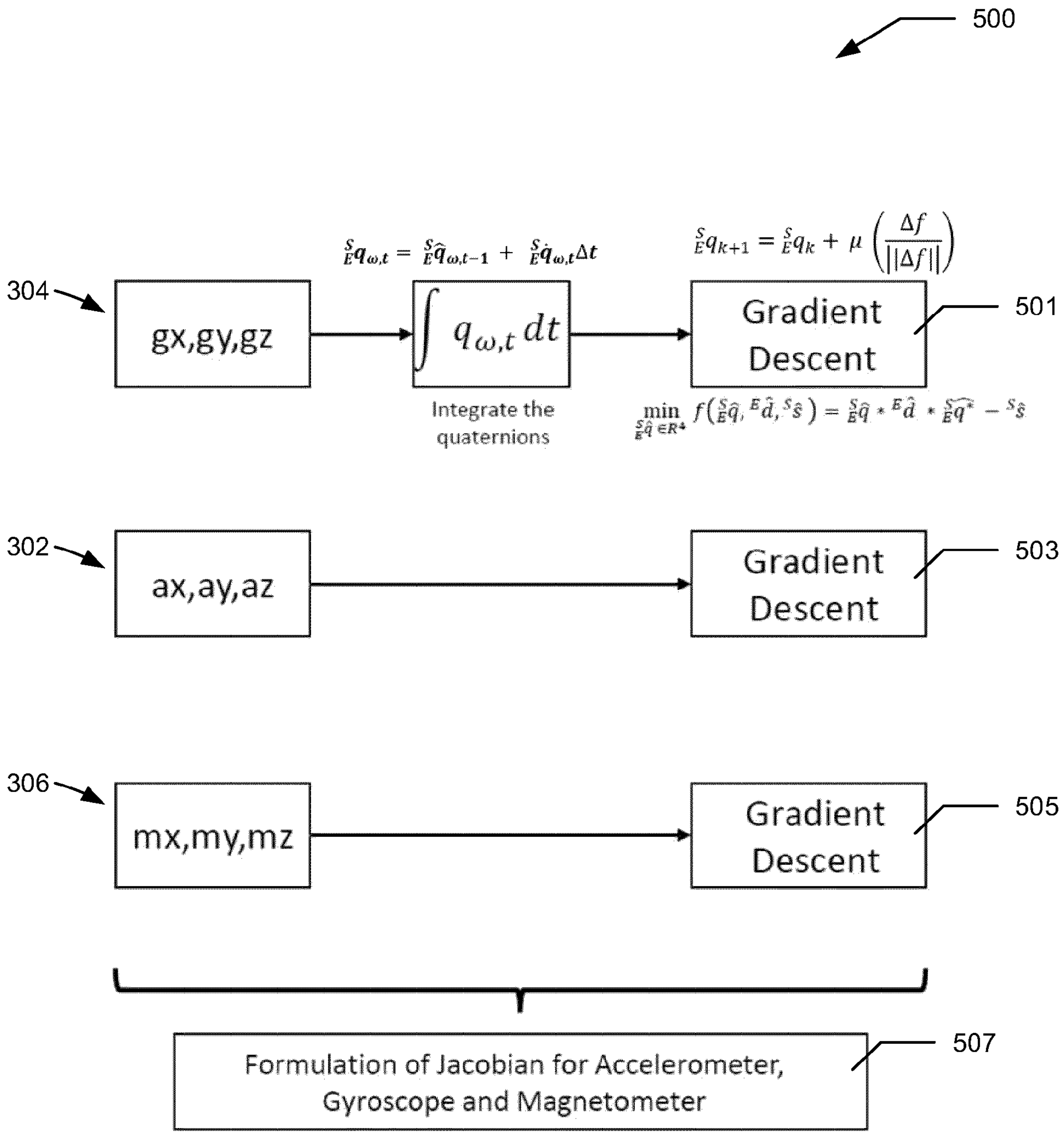

500
$^S_E q_{\omega,t} = ^S_E\hat{q}_{\omega,t-1} + ^S_E\dot{q}_{\omega,t}\Delta t$
$^S_E q_{k+1} = ^S_E q_k + \mu \left(\frac{\Delta f}{||\Delta f||}\right)$
304
gx,gy,gz
$\int q_{\omega,t}\, dt$
Integrate the quaternions
Gradient Descent
501
$\min_{^S_E\hat{q} \in R^4} f(^S_E\hat{q}, ^E\hat{d}, ^S\hat{s}) = ^S_E\hat{q} * ^E\hat{d} * ^S_E\hat{q}^* - ^S\hat{s}$
302
ax,ay,az
Gradient Descent
503
306
mx,my,mz
Gradient Descent
505
Formulation of Jacobian for Accelerometer, Gyroscope and Magnetometer
507


FIG. 5

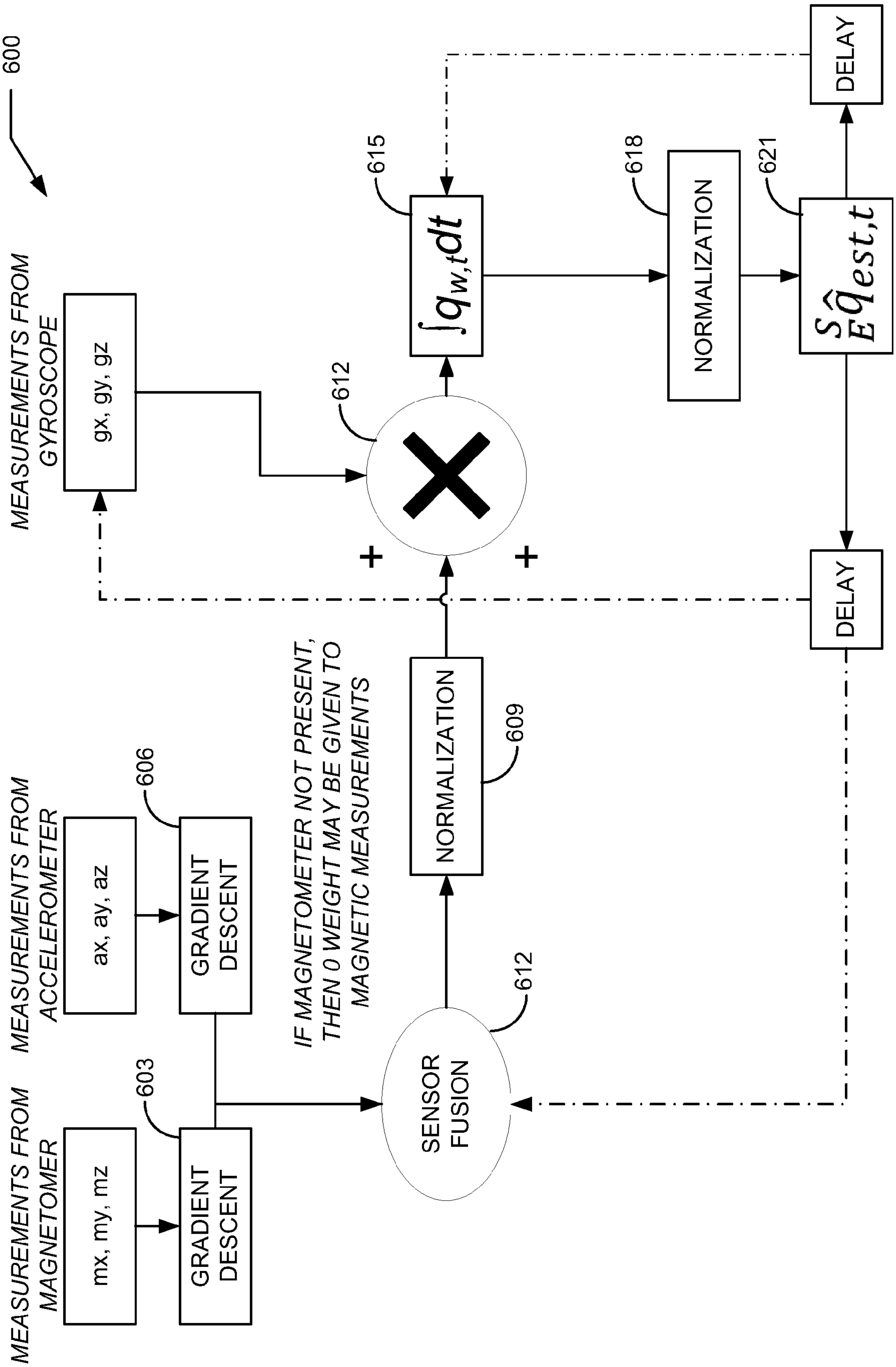
600
MEASUREMENTS FROM MAGNETOMER
mx, my, mz
GRADIENT DESCENT
603
MEASUREMENTS FROM ACCELEROMETER
ax, ay, az
GRADIENT DESCENT
606
MEASUREMENTS FROM GYROSCOPE
gx, gy, gz
IF MAGNETOMETER NOT PRESENT, THEN 0 WEIGHT MAY BE GIVEN TO MAGNETIC MEASUREMENTS
SENSOR FUSION
612
NORMALIZATION
609
612
+
+
615
$\int q_{w,t} dt$
618
NORMALIZATION
621
$^S_E\hat{q}_{est,t}$
DELAY
DELAY

FIG. 6

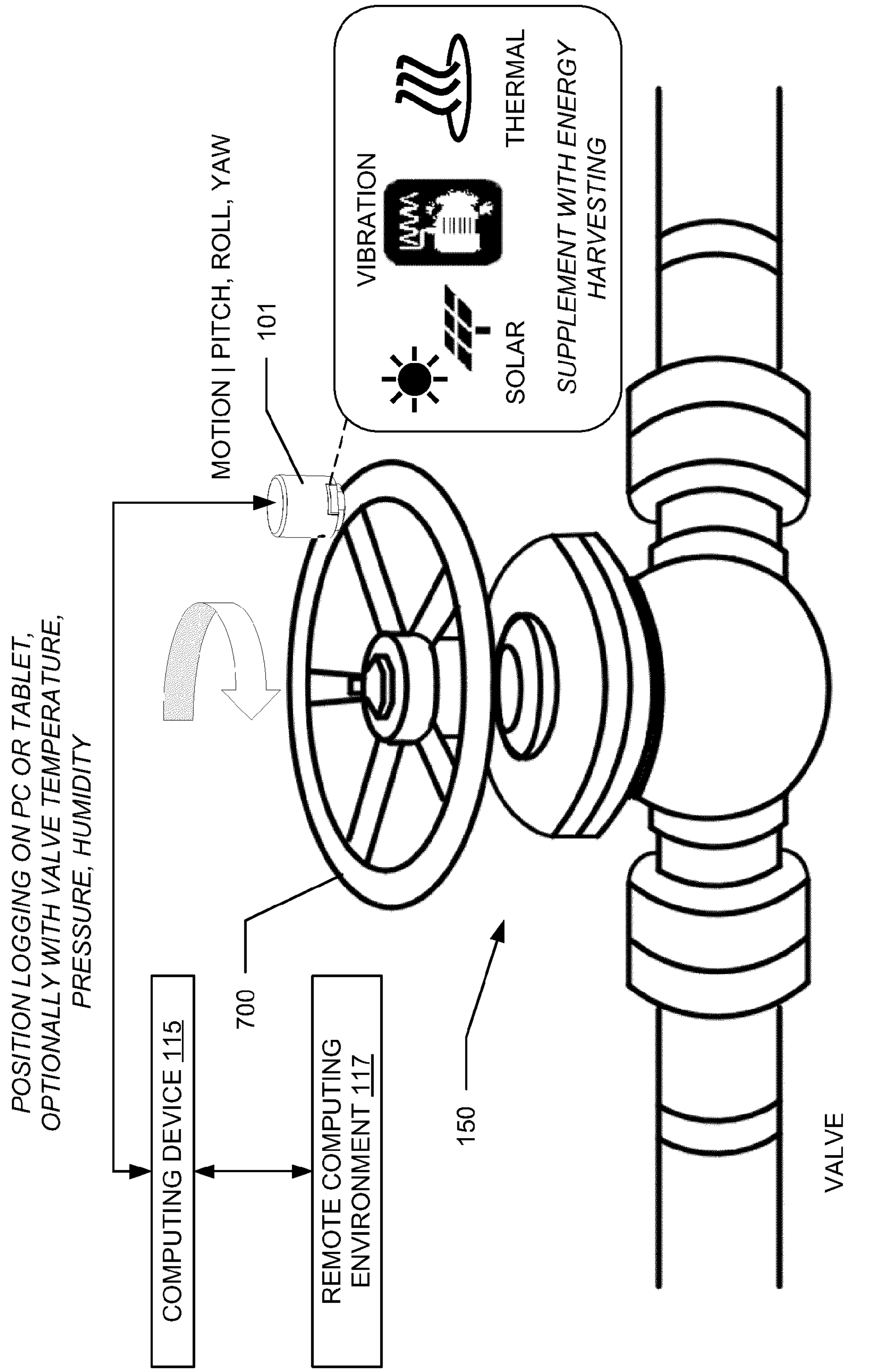
POSITION LOGGING ON PC OR TABLET, OPTIONALLY WITH VALVE TEMPERATURE, PRESSURE, HUMIDITY
COMPUTING DEVICE 115
REMOTE COMPUTING ENVIRONMENT 117
700
150
VALVE
MOTION | PITCH, ROLL, YAW
101
SOLAR
VIBRATION
THERMAL
SUPPLEMENT WITH ENERGY HARVESTING

FIG. 7

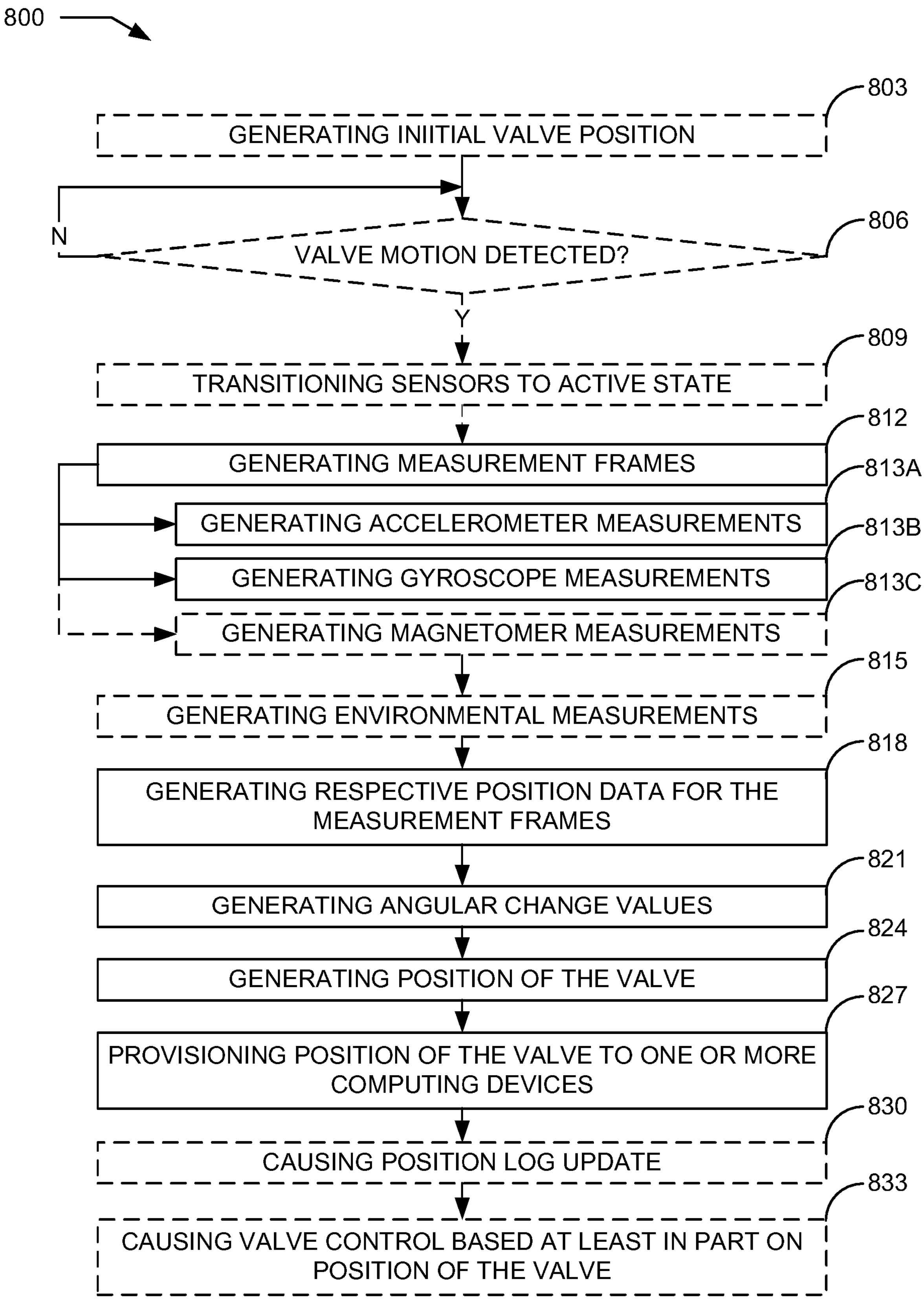
800
803
GENERATING INIITIAL VALVE POSITION
806
VALVE MOTION DETECTED?
N
Y
809
TRANSITIONING SENSORS TO ACTIVE STATE
812
GENERATING MEASUREMENT FRAMES
813A
GENERATING ACCELEROMETER MEASUREMENTS
813B
GENERATING GYROSCOPE MEASUREMENTS
813C
GENERATING MAGNETOMER MEASUREMENTS
815
GENERATING ENVIRONMENTAL MEASUREMENTS
818
GENERATING RESPECTIVE POSITION DATA FOR THE MEASUREMENT FRAMES
821
GENERATING ANGULAR CHANGE VALUES
824
GENERATING POSITION OF THE VALVE
827
PROVISIONING POSITION OF THE VALVE TO ONE OR MORE COMPUTING DEVICES
830
CAUSING POSITION LOG UPDATE
833
CAUSING VALVE CONTROL BASED AT LEAST IN PART ON POSITION OF THE VALVE

FIG. 8

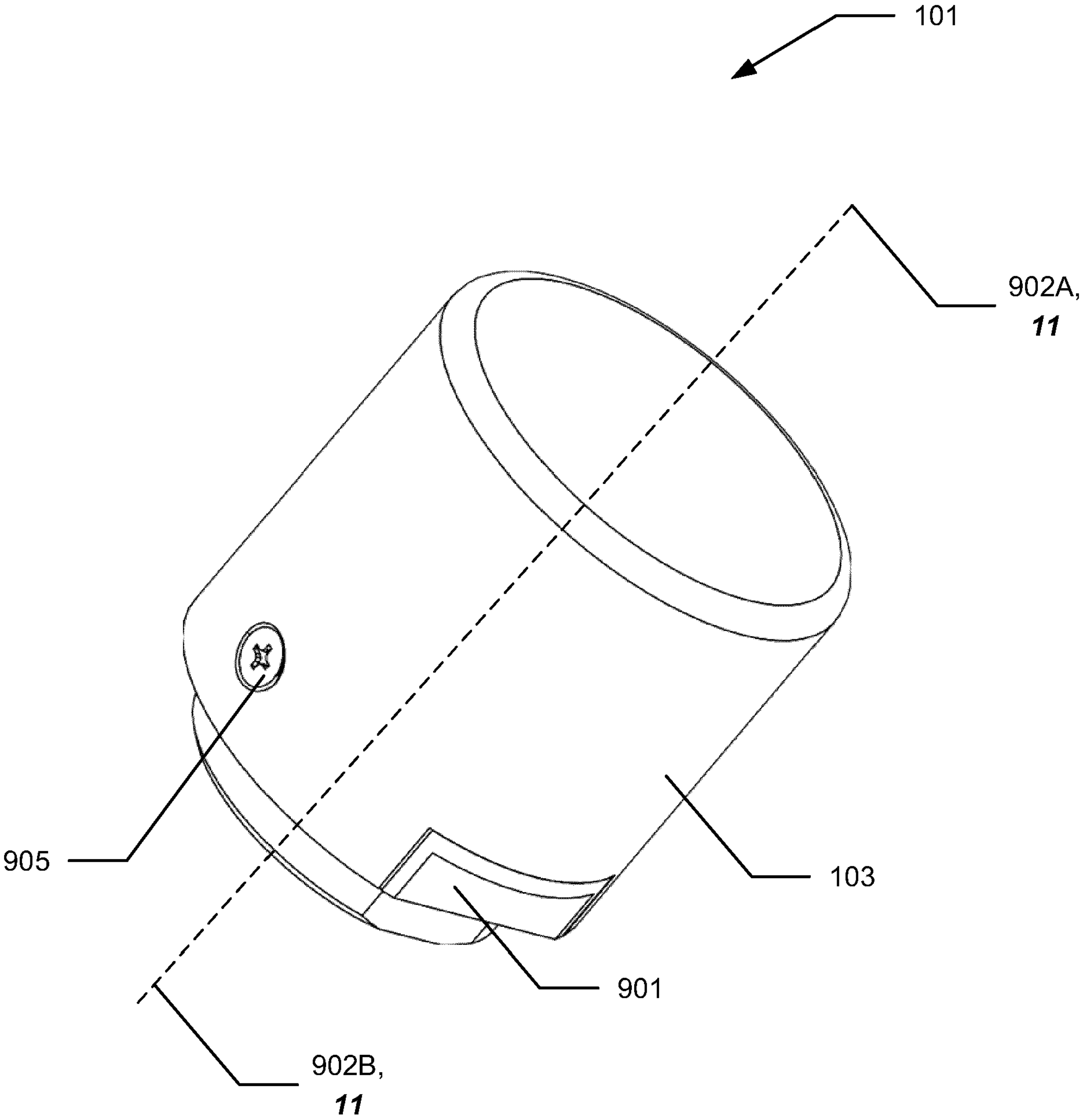


FIG. 9

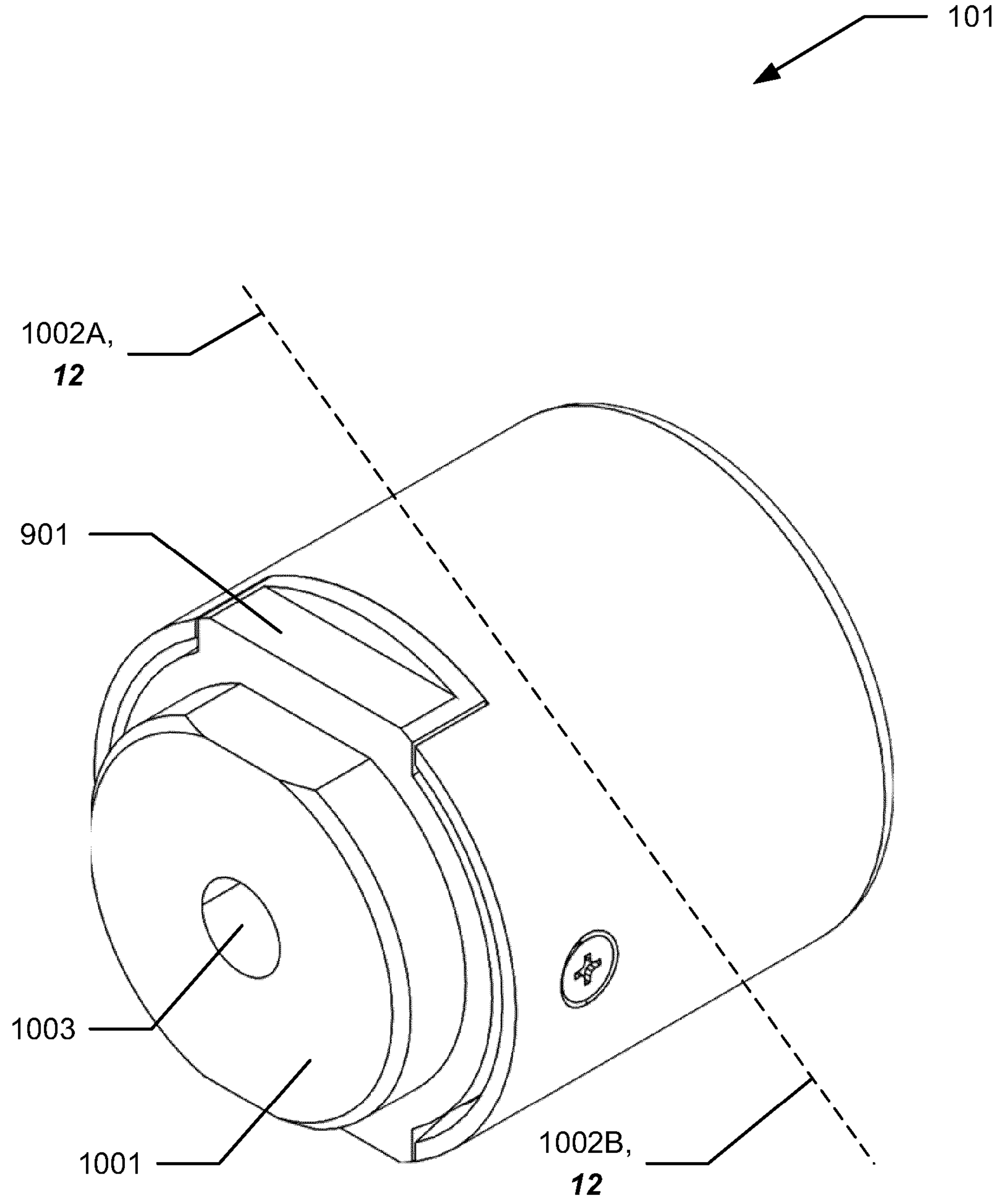


FIG. 10

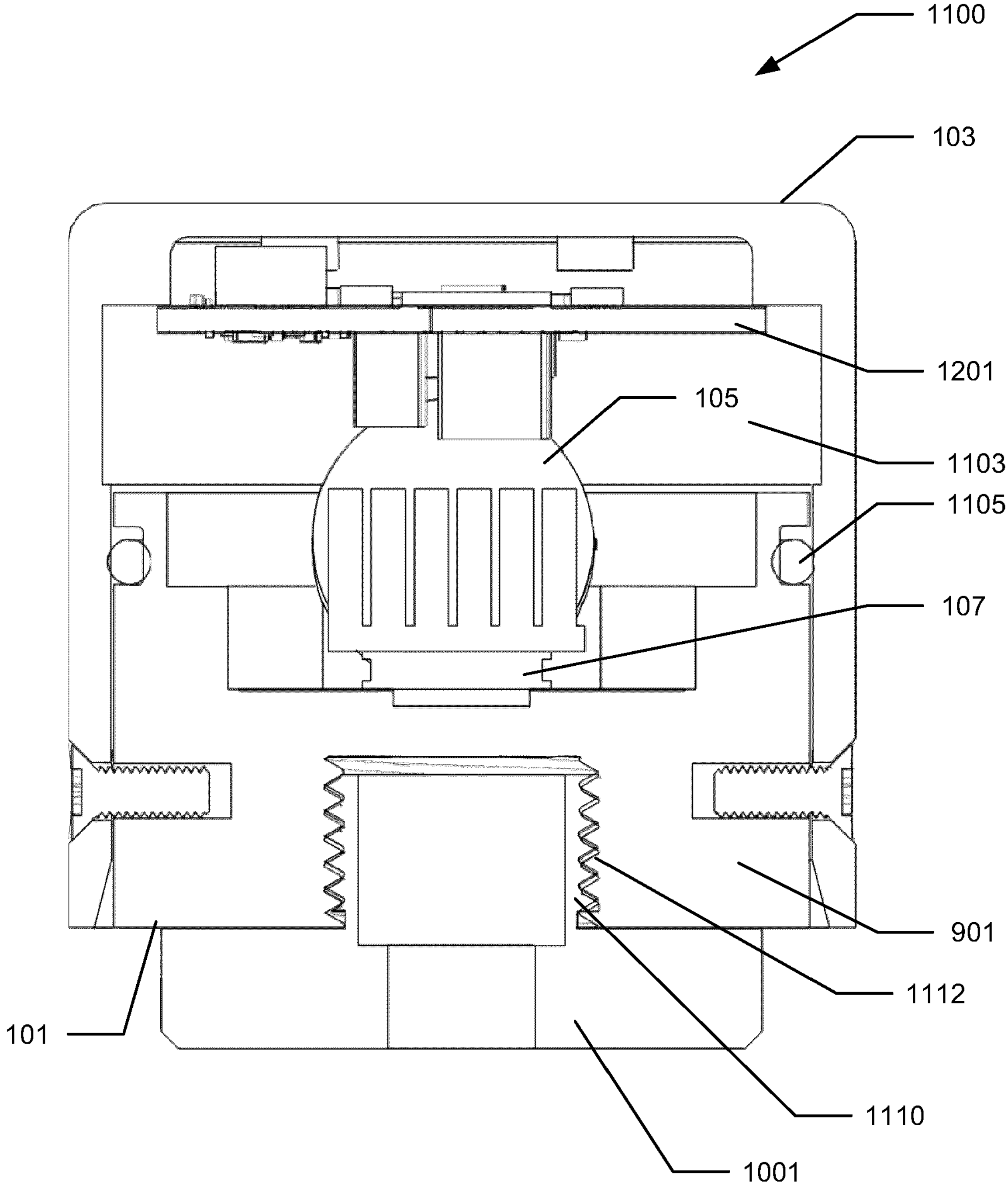


FIG. 11

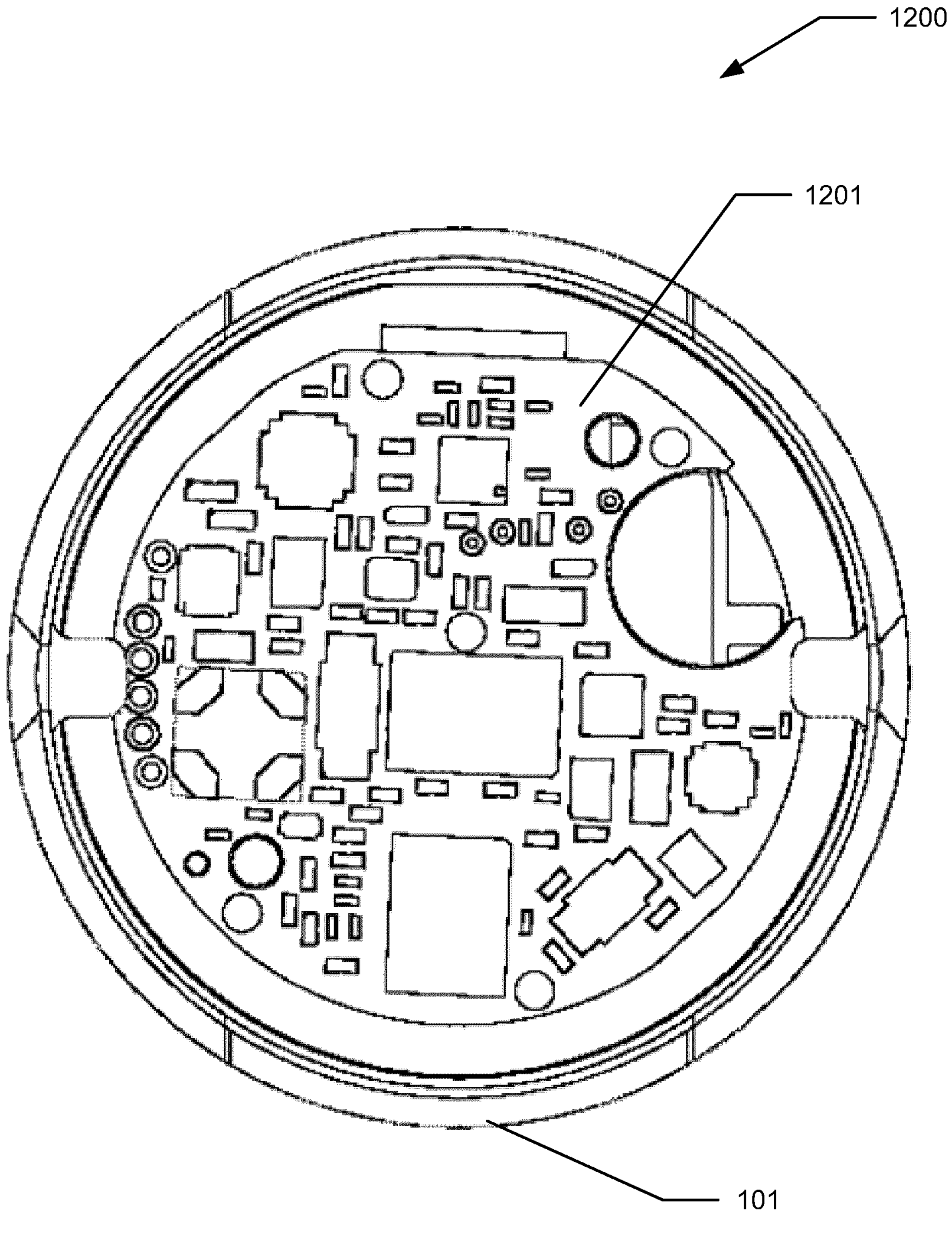


FIG. 12

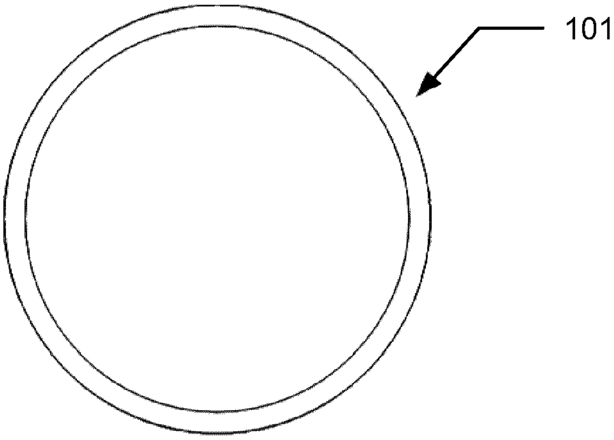


FIG. 13A

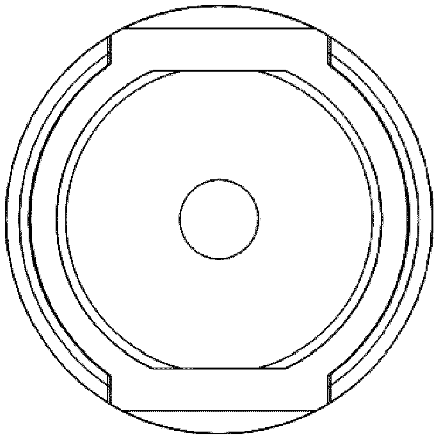

FIG. 13B

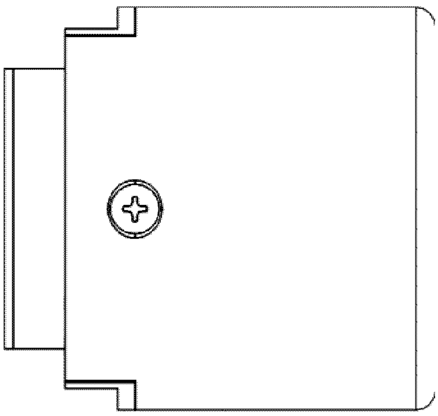

FIG. 13C

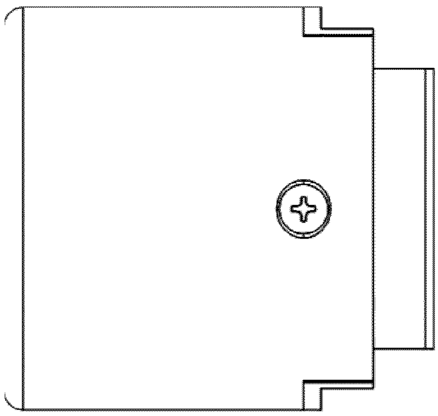

FIG. 13D

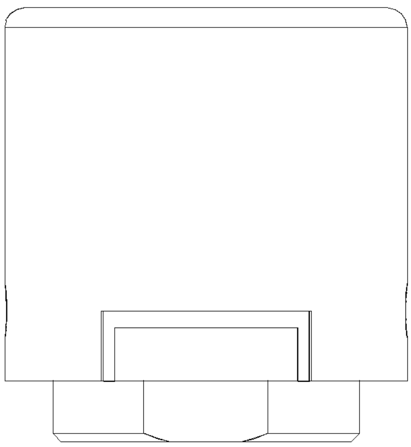

FIG. 13E

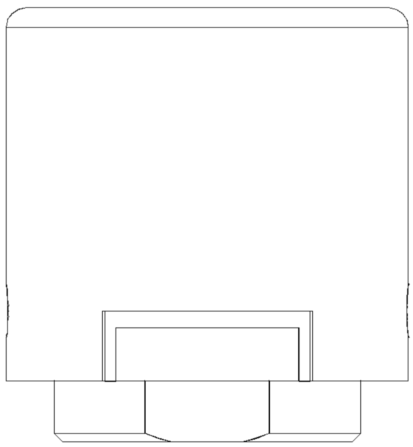

FIG. 13F

Europäisches Patentamt
European Patent Office
Office européen des brevets

# EUROPEAN SEARCH REPORT

Application Number
EP 25 19 1887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 3 044 175 A1 (DASANI SRIDHAR [CA]; KOSIK HARVEY KOLTIN [CA]) 24 November 2020 (2020-11-24) * the whole document * ----- | 1-15 | INV. F16K37/00 |
| X | CN 109 555 897 B (HUANG QIANG) 19 January 2024 (2024-01-19) * the whole document * ----- | 1-15 | |
| X | Fabien Joseph Chraim ET AL: "Wireless Sensing Applications for Critical Industrial Environments", , 31 December 2014 (2014-12-31), XP055585688, ISBN: 978-1-321-62984-2 Retrieved from the Internet: URL:https://www2.eecs.berkeley.edu/Pubs/TechRpts/2014/EECS-2014-215.pdf | 1-7, 10-15 | |
| A | * the whole document * ----- | 8,9 | TECHNICAL FIELDS SEARCHED (IPC) |
| X | WO 2021/117810 A1 (KITZ CORP [JP]) 17 June 2021 (2021-06-17) * the whole document * ----- | 1-15 | F16K |
| X | WO 2016/175800 A1 (FMC TECH INC [US]) 3 November 2016 (2016-11-03) * the whole document * ----- | 1-15 | |
| X | FR 3 084 155 A1 (CENTRE NAT RECH SCIENT [FR]; UNIV MONTPELLIER [FR]) 24 January 2020 (2020-01-24) * the whole document * ----- | 1-15 | |

The present search report has been drawn up for all claims

3

| Place of search | Date of completion of the search | Examiner |
|---|---|---|
| The Hague | 10 January 2026 | Asensio Estrada, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 19 1887

This annex lists the patent family members relating to the patent documents cited in the above-mentioned European search report. The members are as contained in the European Patent Office EDP file on
The European Patent Office is in no way liable for these particulars which are merely given for the purpose of information.

10-01-2026

| Patent document cited in search report | Publication date | Patent family member(s) | Publication date |
|---|---|---|---|
| CA 3044175 A1 | 24-11-2020 | NONE | |
| CN 109555897 B | 19-01-2024 | NONE | |
| WO 2021117810 A1 | 17-06-2021 | CN 114787736 A | 22-07-2022 |
| | | DE 112020005513 T5 | 01-09-2022 |
| | | JP 7606980 B2 | 26-12-2024 |
| | | JP WO2021117810 A1 | 17-06-2021 |
| | | US 2022413454 A1 | 29-12-2022 |
| | | WO 2021117810 A1 | 17-06-2021 |
| WO 2016175800 A1 | 03-11-2016 | NONE | |
| FR 3084155 A1 | 24-01-2020 | FR 3084155 A1 | 24-01-2020 |
| | | WO 2020016326 A1 | 23-01-2020 |

EPO FORM P0459

For more details about this annex : see Official Journal of the European Patent Office, No. 12/82